# EUROPEAN PATENT APPLICATION

(11) **EP 1 894 745 A1**
(43) Date of publication of application: **05.03.2008**
(21) Application number: 07015760.7
(22) Date of filing: 10.08.2007
(51) Int. Cl.: B60B 21/06, B60B 1/04

(54) **Rim for a bicycle spoked wheel, process suitable for manufacturing it, and relative spoked wheel**

(30) Priority: 01.09.2006 IT MI20061670
(71) Applicant: CAMPAGNOLO S.r.l., 36100 Vicenza (VI) (IT)
(72) Inventor: Dal Pra', Giuseppe, 36010 Zané - VI (IT); Urbani, Davide, 36075 Montecchio Maggiore - VI (IT)
(74) Representative: Riccardi, Elisa

(57) **Abstract**

A rim (122) for a bicycle spoked wheel (121) is disclosed that has a change of radial section of the side walls (13, 14). Through changes of symmetry/asymmetry with respect to a middle plane and/or changes of radial extent, it is possible to improve the performance of the rim in terms of balance, camber angles and/or strength. Preferably, the radial section is variable, still of constant area along the circumference, apart from holes (123a, 124a, 125a) for the attachment of spokes and possible openings (123b, 124b, 125b) for the passage of nipples. A process for manufacturing a rim for a bicycle wheel is also described, comprising hydroforming a tubular extruded piece to locally change the section of the side walls (13, 14).

## Description

The present invention refers to a rim for a bicycle spoked wheel to a process suitable for manufacturing it, and to a bicycle spoked wheel comprising such a rim.

It is known that bicycle spoked wheels are formed of a peripheral crown or rim, a central hub, and a plurality of spokes that connect the hub to spoke attachment areas of the rim. Conventional rims have a radial section that is symmetrical with respect to the middle plane, also in the spoke attachment areas. The attachment of the spokes to the rim on one side and to the ends of the hub on the other side defines an arrangement of the spokes themselves sloping with respect to the middle plane by an angle indicated as camber angle of the wheel.

In the conventional rims described above, the first family of spokes that connect the rim to the first end of the hub, and the second family of spokes that connect the rim to the other end of the hub, can be arranged symmetrically with respect to the middle plane and therefore have the same camber angle, when the point of attachment of the spokes to the hub is equidistant from the middle plane.

The amount and the efficiency of the transmission of the forces and the stiffness of the wheel are governed by the size of the camber angle and by the balance between the camber angles between the two families of spokes. A greater camber angle and a good balancing of the camber angles between the two families of spokes (better if perfectly balanced) means that a more efficient and rigid wheel is made.

Due to the presence of elements mounted on the hub, like for example the sprocket-carrying body axially coupled with the rear hub of the bicycle or the elements of the disc-type brake system associated with the wheel typically in off road bicycles (mountain bikes), it may however be necessary to move the point of attachment of the spokes of a first family towards positions closer to the middle plane of the wheel, i.e. towards less structurally efficient positions. Moreover, said elements mounted on the hub cause an asymmetry that may even be remarkable in the arrangement of the spokes of the two families. The displacement of the point of attachment of the spokes of the first family of spokes towards the middle plane of the wheel causes indeed a reduction in the camber angle of the corresponding family of spokes and an unbalancing of the camber with respect to the other family of spokes arranged on the other side with respect to the middle plane. This causes a loss of transversal stiffness of the wheel and forces higher tensions to be used on the spokes. The increased tensions on the spokes increases the stress to which the elements of the wheel (spoke and rim) are subjected, thus increasing the possibility of breaking by fatigue.

To better balance the camber angles, the rim described in U.S. patent 5,228,756 has an asymmetrical radial section, and the point of attachment of the spokes to the rim, both of the first family of spokes and of the second family of spokes, is displaced to the same side with respect to the middle plane of the rim.

If on the one hand the rims of such a document improve the balance of the camber angles, on the other hand they bring about an asymmetry of the radial section of the rim along the entire circumference, causing asymmetric behaviour also from the point of view of the stiffness of the wheel during operation. Due to the asymmetric rim, moreover, the forces transmitted by the cyclist whilst pedalling are asymmetrically distributed over the components of the wheel itself (rim, hub, spokes, nipples etc.) making their sizing more critical, and requiring them to be oversized so as to be able to meet the holding requirements even in the most critical conditions.

The stiffness of a rim is critical also in terms of the so-called "daisy effect", which consists in that when the spokes are tensioned to form the wheel, a deformation is caused in the rim, with a local reduction in the diameter of the wheel at the spokes or at groups of closely spaced spokes. In the portions without spokes or groups of spokes, called infra-spoke areas, such a reduction in diameter occurs less or does not occur at all or even an increase in diameter occurs. The result is that the wheel is seen to "expand" in the radial direction in the infra-spoke areas. In such infra-spoke areas, the rim, not being held by the spoke, must with its own characteristics fulfil the requirement of stiffness needed by the wheel so as not to be excessively deformable.

The aforementioned daisy effect is more accentuated in the case of spoking with groups of spokes, since there is a concentration of spoke tensioning forces and also the length of the infra-spoke areas is increased.

To counteract the daisy effect, EP 1 316 442 B2 proposes a rim having a diameter initially greater at the spoke attachment areas with respect to the infra-spoke areas, which upon mounting the wheel is supposed to have a lesser daisy effect.

The object of the present invention is to provide a rim for bicycle wheels that allows one or more of the aforementioned drawbacks of rims of the prior art to be at least partially avoided.

Also an object of the invention is to provide a new process for manufacturing a rim for bicycle wheels, which in particular allows such rims to be obtained.

In a first aspect thereof, the invention concerns a rim for a bicycle spoked wheel, comprising two opposite side walls, characterised by having a change of radial section of the side walls. Through changes of symmetry/asymmetry with respect to a middle plane and/or changes of radial extent, it is possible to improve the performance of the rim in terms of balance, camber angles and/or strength.

In the present description and in the attached claims, the expression "opposite side walls" should not be taken to be limited to side walls that mirror one another with respect to an intermediate plane.

Typically, the rim further comprises a lower bridge and possibly an upper bridge, extending between the two opposite side walls.

Preferably, the radial section has a constant area along the circumference, apart from spoke attachment holes and possible openings for the passage of nipples. Thanks to the constant area of the radial section, the weight of the rim of the invention is evenly distributed along its circumference.

Preferably the radial section changes gradually along the circumference, namely there are no abrupt changes of section, which could represent points of weakness and at which cracks could form.

The radial section can be variable so as not to keep a predetermined symmetry or asymmetry with respect to a middle plane of the rim along the circumference. By locally controlling the symmetry or asymmetry of the section it is possible in particular to displace the spoke attachment points of the two families of spokes to optimise the camber angles, without causing unbalancing, or causing limited unbalancing, of the rim due to differences in the number of spokes on the two sides.

In particular, the rim according to the invention can comprise spoke attachment areas and infra-spoke areas,
wherein the radial section in each spoke attachment area is asymmetric, more specifically wherein the radial section in the spoke attachment areas is asymmetric and unbalanced towards a first side and/or towards a second side of the rim. By unbalancing the section towards a particular side of the rim it is possible to make a spoke attachment hole that is displaced with respect to the middle plane to increase its camber angle in a sufficiently strong area of the rim, in particular in a lower bridge thereof.

More specifically, when there are at least two spoke attachment holes in each spoke attachment area, the radial section at each spoke attachment hole is asymmetric and unbalanced towards a respective side of the rim.

The radial section of the rim along the infra-spoke areas, namely along a substantial if not predominant part of the rim, can be symmetrical to limit the asymmetry of the rim to the spoke attachment areas.

The radial section in the infra-spoke areas can also be variable so as to at least partially compensate the asymmetries of the section in the spoke attachment areas.

In a first alternative, the radial section in the infra-spoke areas changes continually from one said asymmetrical radial section unbalanced towards a first side of an adjacent spoke attachment area, to an asymmetrical radial section unbalanced towards a second side at the centre of the infra-spoke area, to one said asymmetrical radial section unbalanced towards the first side of a second adjacent spoke attachment area. In the present description and in the attached claims, under "continually changing" it is meant that the rim has substantially no portions with constant section. Such an alternative is applicable in particular in rims for spokings with individual spokes or spokes distributed in groups of three spokes or other odd numbers of spokes, in which an infra-spoke area extends between two spokes of the same family.

In a second alternative, the radial section in the infra-spoke areas changes continually from one said asymmetrical radial section and unbalanced towards a first side of a first adjacent spoke attachment area, to a symmetrical radial section at the centre of the infra-spoke area, to one said asymmetrical radial section and unbalanced towards a second side of a second adjacent spoke attachment area. Such an alternative is applicable in particular in rims for spokings with groups of pairs of spokes or of other even numbers of spokes, or in spokings with distributed spokes in which an infra-spoke area extends between two spokes of different families.

Alternatively or in addition to the change in terms of symmetry/asymmetry, the radial section of the rim can change in terms of radial extent. In this way it is possible to control the moment of inertia of each section of the rim, with respect to its own neutral axis, and consequently to locally control the stiffness of the rim to counteract, for example, the daisy effect described above.

In one alternative, the radial section of the rim in each spoke attachment area has a shorter radial extent than each infra-spoke area. The infra-spoke areas therefore have a greater stiffness and are less radially deformed when the spokes are tensioned between the rim and the hub to make the wheel.

In another alternative, the radial section of the rim in each spoke attachment area has a longer radial extent than each infra-spoke area. The spoke attachment areas therefore have greater stiffness that allows the radial deformation in the spoke attachment areas themselves to be reduced when the spokes are tensioned between the rim and the hub to make the wheel.

In a further alternative, the radial section of the rim in each spoke attachment area and in a central part of each infra-spoke area has a comparatively long radial extent, and the radial section in lateral parts of each infra-spoke area has a comparatively short radial extent. The spoke attachment areas and the central part of the infra-spoke areas therefore have a greater stiffness, which allows the radial deformation of such areas and consequently of the entire infra-spoke areas to be reduced when the spokes are tensioned between the rim and the hub to make the wheel. Experimental tests have confirmed that the lateral parts of the infra-spoke areas are subject to less stress than the central part of the infra-spoke areas and than the spoke attachment areas during the tensioning of the spokes, for which reason the rim in such lateral parts of the infra-spoke areas can advantageously have a lesser moment of inertia than the adjacent spoke attachment areas and than the central parts of the infra-spoke areas.

The radial section in each spoke attachment area can have a radial extent longer than, shorter than or equal to a radial extent of the radial section in the central part of each infra-spoke area.

In an embodiment, the radial section changes so as not to keep a predetermined symmetry or asymmetry with respect to a middle plane of the rim along the circumference, and also changes in terms of radial extent.

In a second aspect thereof, the invention concerns a spoked wheel for a bicycle, comprising a rim as described above, a hub and a plurality of spokes extending and tensioned between the rim and the hub.

In a third aspect thereof, the invention concerns a process for manufacturing a rim for a bicycle wheel,
characterised by comprising a step of hydroforming a precursor of the rim.

Through hydroforming it is possible to obtain a rim having any change of section, in particular as described above, and/or a non-circular shape.

Preferably, in the hydroforming step a change of radial section of the side walls of the rim is caused.

Preferably, in the step of hydroforming the precursor of the rim a variable radial section of constant area is preserved.

More specifically, the process according to the invention comprises the steps of:
- providing a piece of a predetermined length of a metallic material, having at least two opposite walls,
- winding the piece on itself to obtain a curved element,
- hydroforming the curved element into a hydroformed curved element.

Preferably, moreover, in the step of providing a piece, the cross section of the piece is less than or equal to the envelope of all the radial sections of the rim to be obtained.

Typically, the step of providing a piece comprises an extrusion step.

Typically, moreover, the step of winding the piece on itself comprises a calendaring step.

The hydroforming step comprises inserting said curved element inside a forming mould formed from two half-moulds that make a cavity having a shape matching the desired final shape of the rim, closing the forming mould, injecting a fluid under pressure inside the curved element to plastically deform it, and removing the hydroformed curved element from the mould.

Preferably, said curved element is tubular and the pressurised fluid is injected from an end of the curved element tubular, while the other end is closed.

Said pressurised fluid is preferably oil.

Preferably, the process further comprises the step of juxtaposing and joining the ends of the hydroformed curved element to obtain a rim-shaped element.

Typically, the step of joining the ends of the hydroformed curved element comprises a welding step.

The manufacturing process can further comprise the step of cutting to the right size the ends of the hydroformed curved element before juxtaposing and joining them.

The process can further comprise the step of making a plurality of spoke attachment holes in the rim-shaped element.

The manufacturing process can comprise the step of making openings for the passage of the nipples in the rim-shaped element.

The invention shall now be better described with reference to some embodiments thereof, illustrated merely as a non-limiting example in the attached drawings, wherein:
- FIG. 1 shows the isometric view of a wheel with a rim according to a first embodiment of the invention;
- FIG. 2 shows a partial radial section of the wheel of FIG. 1;
- FIG. 3 shows a side view of the rim according to the first embodiment of the invention;
- FIGS. 4-7 show radial sections, respectively along the planes C-C, D-D, E-E, F-F, of the rim of FIG. 3;
- FIG. 8 shows a partial isometric view of the rim of FIG. 3;
- FIG. 9 shows the isometric view of a wheel with a rim according to a second embodiment of the invention;
- FIG. 10 shows a side view of the rim according to the second embodiment of the invention;
- FIGS. 11-14 show radial sections, respectively along the planes C-C, D-D, E-E, F-F, of the rim of FIG. 10;
- FIG. 15 shows a partial isometric view of the rim of FIG. 10;
- FIG. 16 shows the isometric view of a wheel with a rim according to a third embodiment of the invention;
- FIG. 17 shows a partial radial section of the wheel of FIG. 16;
- FIG. 18 shows a side view of the rim according to the third embodiment of the invention;
- FIGS. 19-21 show radial sections, respectively along the planes C-C, D-D, F-F, of the rim of FIG. 18;
- FIG. 22 shows a partial isometric view of the rim of FIG. 18;
- FIG. 23 shows the isometric view of a wheel with a rim according to a fourth embodiment of the invention;
- FIG. 24 shows a side view of the rim according to the fourth embodiment of the invention;
- FIGS. 25-26 show radial sections, respectively along the planes C-C, D-D, of the rim of FIG. 24;
- FIG. 27 shows a partial isometric view of the rim of FIG. 24;
- FIG. 28 shows the isometric view of a wheel with a rim according to a fifth embodiment of the invention;
- FIG. 29 shows a side view of the rim according to the fifth embodiment of the invention;
- FIGS. 30-32 show radial sections, respectively along the planes C-C, D-D, F-F, of the rim of FIG. 29;
- FIG. 33 shows a partial isometric view of the rim of FIG. 29;
- FIG. 34 shows the isometric view of a wheel with a rim according to a sixth embodiment of the invention;
- FIG. 35 shows a side view of the rim according to the sixth embodiment of the invention;
- FIGS. 36-38 show radial sections, respectively along the planes C-C, D-D, F-F, of the rim of FIG. 35;
- FIG. 39 shows a partial isometric view of the rim of FIG. 35;
- FIG. 40 shows the isometric view of a wheel with a rim according to a seventh embodiment of the invention;
- FIG. 41 shows a side view of the rim according to the seventh embodiment of the invention;
- FIGS. 42-45 show radial sections, respectively along the planes C-C, D-D, E-E, F-F, of the rim of FIG. 41;
- FIG. 46 shows the isometric view of a wheel with a rim according to an eighth embodiment of the invention;
- FIG. 47 shows a side view of the rim according to the eighth embodiment of the invention;
- FIGS. 48-51 show radial sections, respectively along the planes C-C, D-D, E-E, F-F, of the rim of FIG. 47;
- FIG. 52 shows the isometric view of a wheel with a rim according to a ninth embodiment of the invention;
- FIG. 53 shows a side view of the rim according to the ninth embodiment of the invention;
- FIGS. 54-58 show radial sections, respectively along the planes C-C, D-D, E-E, F-F, G-G, of the rim of FIG. 53;
- FIG. 59 shows the isometric view of a wheel with a rim according to a tenth embodiment of the invention;
- FIG. 60 shows a side view of the rim according to the tenth embodiment of the invention;
- FIGS. 61-63 show radial sections, respectively along the planes C-C, D-D, F-F, of the rim of FIG. 60;
- FIG. 64 shows the isometric view of a wheel with a rim according to an eleventh embodiment of the invention;
- FIG. 65 shows a side view of the rim according to the eleventh embodiment of the invention;
- FIGS. 66-68 show radial sections, respectively along the planes C-C, D-D, F-F, of the rim of FIG. 65;
- FIG. 69 shows the isometric view of a wheel with a rim according to a twelfth embodiment of the invention;
- FIG. 70 shows a side view of the rim according to the twelfth embodiment of the invention;
- FIGS. 71-74 show radial sections, respectively along the planes C-C, D-D, E-E, F-F, of the rim of FIG. 70;
- FIG. 75 shows the isometric view of a wheel with a rim according to a thirteenth embodiment of the invention;
- FIG. 76 shows a partial radial section of the wheel of FIG. 75;
- FIG. 77 shows a side view of the rim according to the thirteenth embodiment of the invention;
- FIGS. 78-80 show radial sections, respectively along the planes C-C, D-D, F-F, of the rim of FIG. 77;
- FIG. 81 shows a partial isometric view of the rim of FIG. 77;
- FIG. 82 shows various sections of a rim and/or of a precursor of a rim according to the invention, superimposed, and
- FIGS. 83-88 show various steps of a process for manufacturing a rim according to the invention.

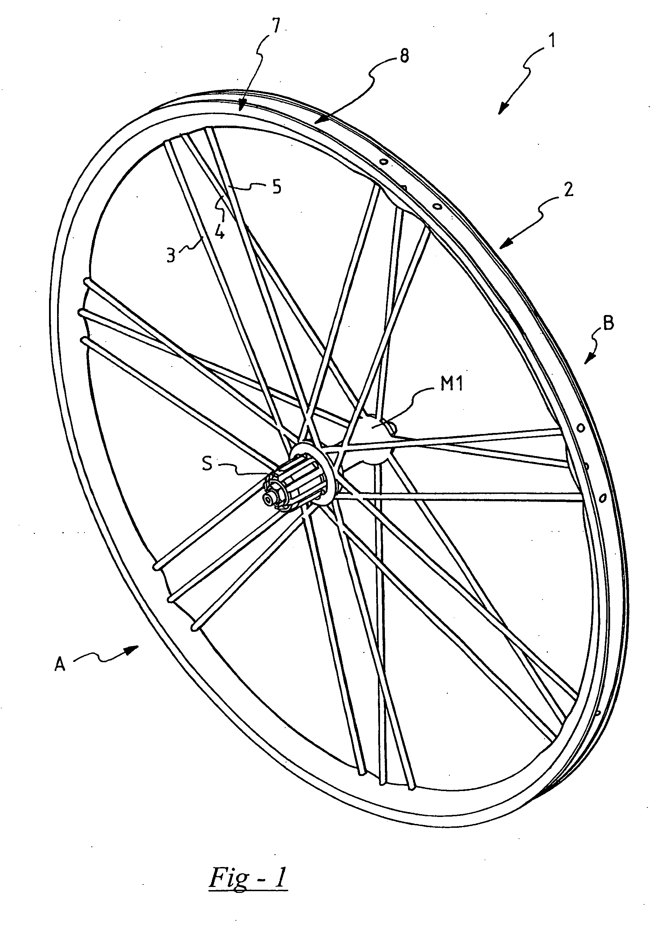

FIG. 1 shows a wheel 1 with a rim 2 according to a first embodiment of the invention.

Wheel 1 is a rear wheel with seven triplets each comprising three spokes 3, 4, 5 tensioned between a hub M1 and seven spoke attachment areas 7 of the rim 2. Between adjacent spoke attachment areas 7, the rim 2 has seven infra-spoke areas 8.

In the wheel 1 and respectively in the rim 2 two sides A, B are defined, the first on the side of a pinion-carrying body S fixed to the hub M1, and the second on the opposite side.

The lateral spokes 3, 5 of each triplet extend tangentially from the hub M1 on the first side A, while the central spokes 4 of each triplet extend radially from the hub M1 on the second side B.

The spokes 3, 5 on the first side A are therefore twice (fourteen) the spokes 4 on the second side B (seven).

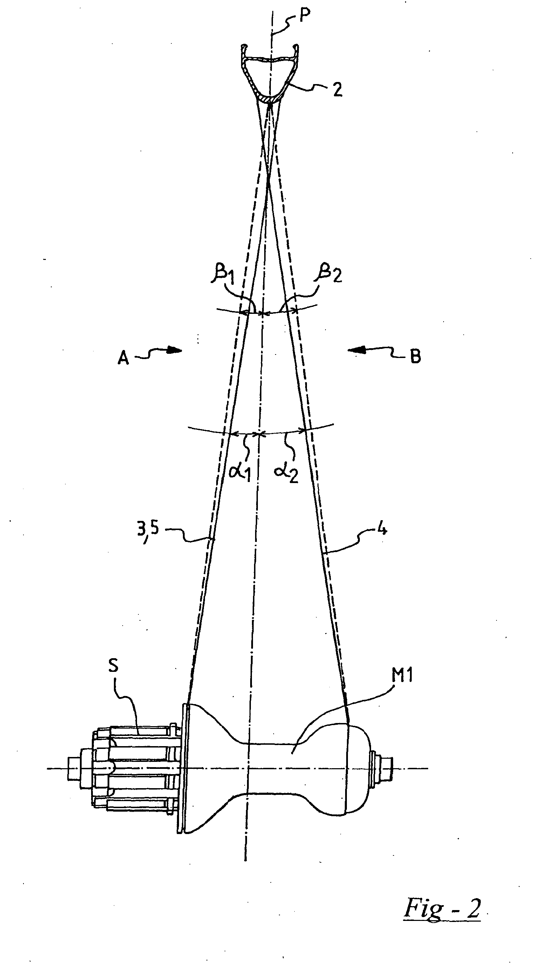

As can be observed in the section view of FIG. 2, the slope of the spokes 3, 5 on the first side A defines camber angle α1 and the slope of the spokes 4 on the second side B defines camber angle α2. Due to the presence of the sprocket-carrying body S, the spokes 3, 5 on the first side A are attached to the hub M1 a shorter distance from the middle plane P of the wheel 1, which corresponds in use to the middle plane of the bicycle. Therefore, camber angle α1 is smaller than camber angle α2.

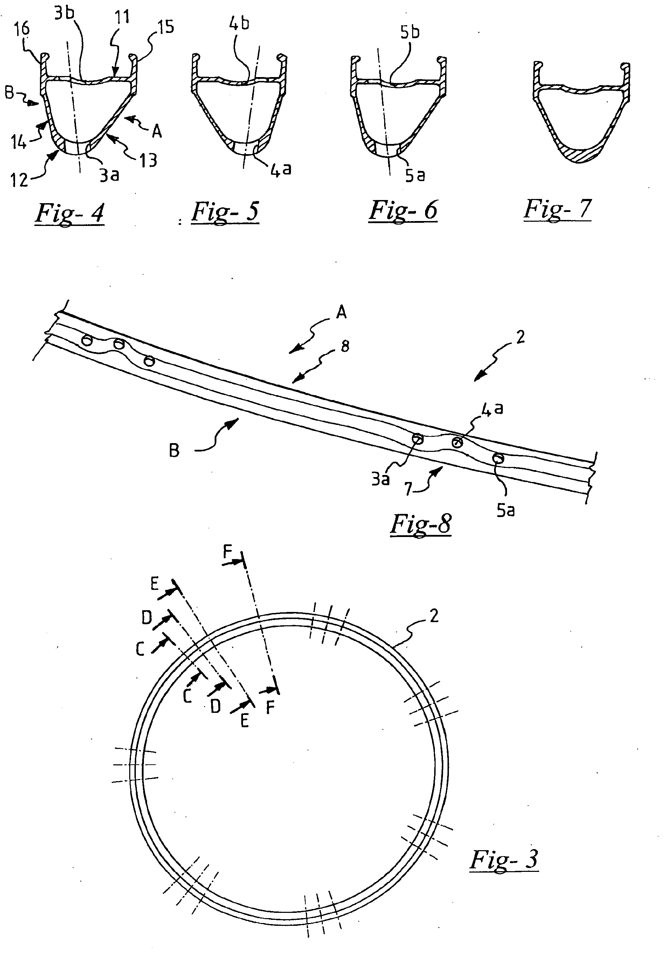

With reference to FIGS. 4-7, which show radial sections of the rim 2 respectively along the planes C-C, D-D, E-E, F-F of FIG. 3, the rim 2 has a radially outer upper bridge 11, a radially inner lower bridge 12 and two side walls 13, 14 that form wings 15, 16 for holding the tyre.

According to the invention, the rim 2 has a variable radial section and more specifically has a change of radial section of the side walls 13, 14. In the spoke attachment areas 7, the rim 2 receives the lateral spokes 3, 5 of each triplet in respective holes 3a, 5a made in areas of the rim 2 that are asymmetrical, unbalanced towards the second side B of the wheel 1, as shown in FIGS. 4, 6 respectively. More specifically, at each hole 3a, 5a and adjacent thereto, the side wall 13 on the first side A is longer and more sloping, with respect to the middle plane P, than the side wall 14 on the second side B.

Again in the spoke attachment areas 7, the rim 2 receives the central spoke 4 of each triplet in a respective hole 4a made in an area that is asymmetric, unbalanced towards the first side A of the wheel 1, as shown in FIG. 5. More specifically, at each hole 4a and adjacent thereto, the side wall 13 on the first side A is shorter and more sloping, with respect to the middle plane P, than the side wall 14 on the second side B.

Such asymmetries allow the centres of the spoke attachment holes 3a, 4a, 5a to be advantageously shifted with respect to the middle plane P of the rim 2 to obtain greater camber angles α1 and α2 than the camber angles β1, β2 that there would be in the case of holes made at the middle plane P. Moreover, the described asymmetries of the rim 2 allow the spoke attachment holes 3a, 4a, 5a to be kept in the lower bridge 12, where the thickness is greater with respect to the side walls 13, 14 and therefore where the stiffness is greater.

In the upper bridge 11 of the rim 2, coaxially with the holes 3a, 4a, 5a, openings 3b, 4b, 5b for the passage of the nipples used to fasten and tension the spokes 3, 4, 5 are made. The openings 3b, 4b, 5b at each spoke attachment area 7 could be replaced by a single opening, or they could be totally left out, for example in rims of the type described in EP 1418064 A1 to the same Applicant.

Along the infra-spoke areas 8, the rim 2 has a symmetrical radial section, as shown in FIG. 7, which shows a section taken along the plane F-F of FIG. 3.

As is more evident in FIG. 8, the radial section of the rim 2 changes between the significant sections shown in FIGS. 4-7 and described above in a gradual manner, i.e. without abrupt changes.

Although the section is variable and asymmetric at the holes 3a, 4a, 5a, the rim 2 has an area of the radial section or cross-section - namely of the upper bridge 11, of the lower bridge 12 and of the side walls 13, 14 - that is constant along the entire circumference, apart from the holes 3a, 4a, 5a themselves and the openings 3b, 4b, 5b where provided for. Therefore, the weight of the rim 2 is evenly distributed along the entire circumference. It should be understood that in practice the area of the cross section could be only substantially constant, for example having changes of the order of 5-10%. It should also be understood that, apart from the holes 3a, 4a, 5a and the openings 3b, 4b, 5b, there could be other causes of a not constant area of the cross section of the rim 2, typically a hole for a tyre inflation valve or pins or fasteners used for the joints of the metallic rims while they are being made.

The wheel 1 according to the first embodiment of the invention therefore has optimised camber values α1 and α2 through making local asymmetries of the rim 2 at the spoke attachment areas 7. Thanks to the symmetry of the rim 2 in the infra-spoke areas 8, which extend for a large part of the circumference of the rim 2, the rim 2, and therefore the wheel 1, are more balanced with respect to the wheels of the prior art, with constant symmetrical or asymmetrical section.

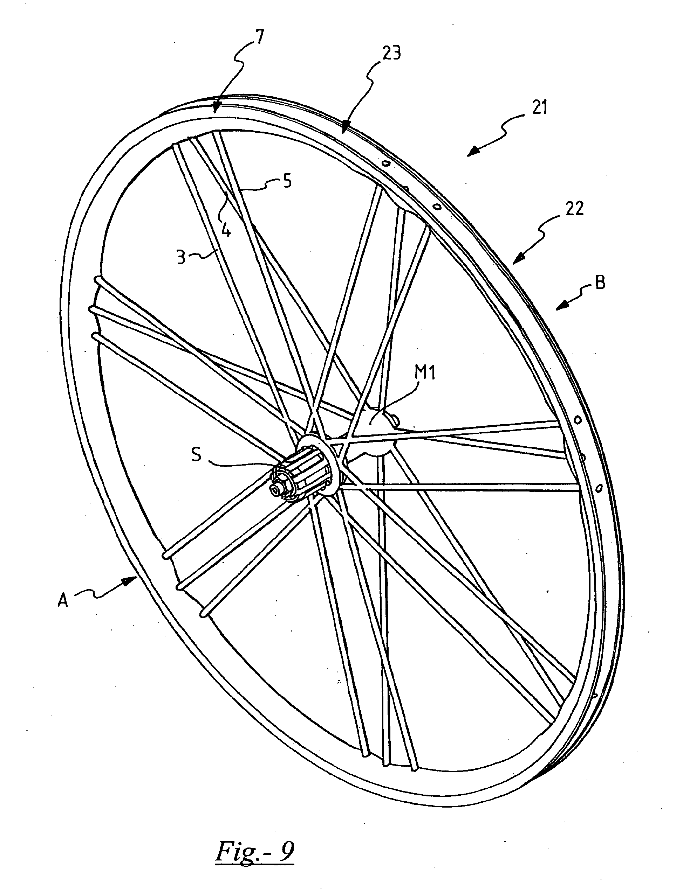

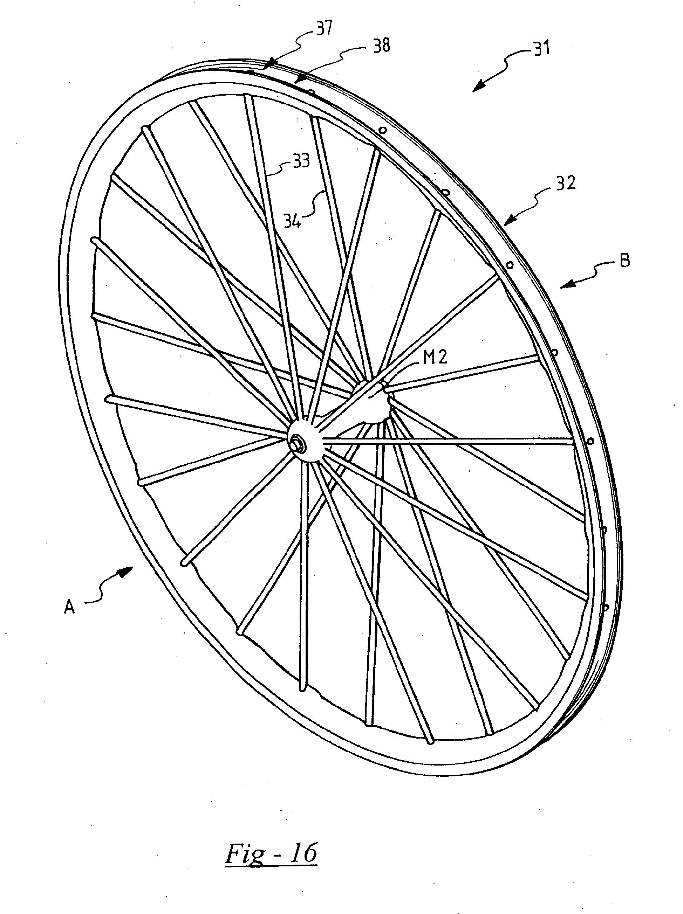

FIG. 9 shows a wheel 21 with a rim 22 according to a second embodiment of the invention, which differs from the first embodiment described above in that in the infra-spoke areas 23 the radial section of the rim 2 is neither constant nor symmetrical. On the contrary, as more evident in FIG. 15, in the infra-spoke areas 23 the rim 22 has a radial section changing between the asymmetrical profiles of the spoke attachment areas 7.

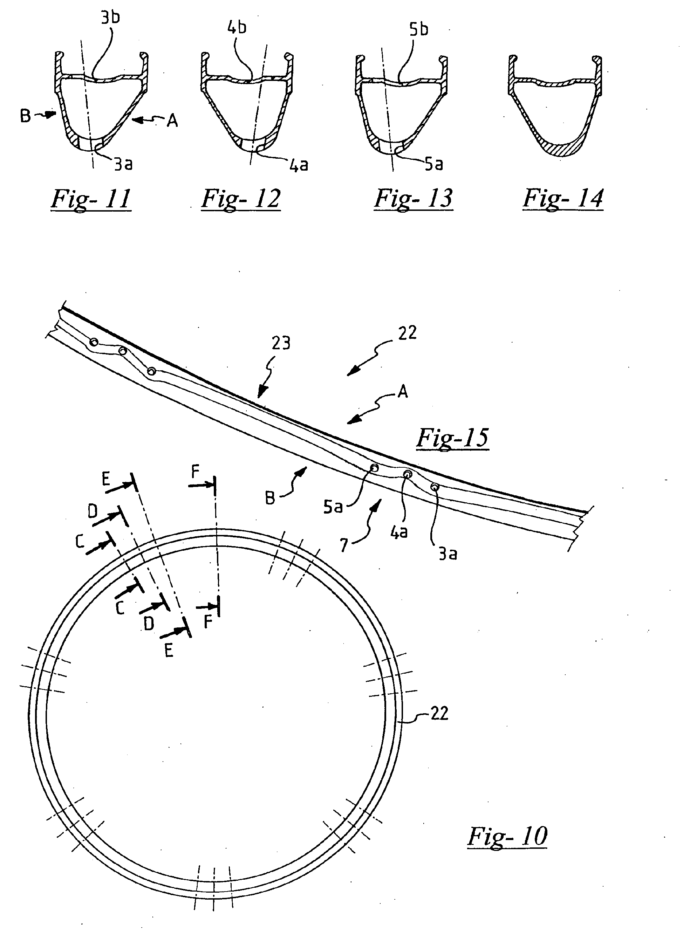

More specifically, at the centre of each infra-spoke area 23 the section of the rim 22, shown in FIG. 14, is equal to that, shown in FIG. 12, at each hole 4a for the attachment of the central spoke 4 of each triplet, apart from the hole 4a itself and for the opening 4b where provided for, namely asymmetrical and unbalanced towards the first side A of the wheel 22; such a section changes continually, namely essentially without portions with constant section, on either side of each infra-spoke area 23, filleting with the sections at the holes 3a, 5a for the attachment of the lateral spokes 3, 5 of each triplet, said sections being shown in FIGS. 11, 13.

In each infra-spoke area 23, the section of the rim 22 therefore advantageously has a progression that overall is unbalanced towards the first side A and therefore compensates the unbalancing due to the asymmetrical sections towards the second side B of the spoke attachment areas 7 at the spoke attachment holes 3a, 5a, which are twice with respect to the asymmetrical sections towards the first side A of the spoke attachment areas 7 at the spoke attachment holes 4a.

Also in the case of the second embodiment, the area of the sections of the spoke attachment areas 7 and the area of the sections of the infra-spoke areas 23 (FIG. 11-14) have the same value, apart from the holes 3a, 4a, 5a and the openings 3b, 4b, 5b where provided for and the other causes outlined above. The weight of the rim 22 is therefore evenly distributed along its circumference.

It should be understood that, in order to obtain a perfectly balanced rim, also based upon the diameter and/or the number of groups of spokes 3-5, the asymmetry of the radial section of the rim 22 at the centre of each infra-spoke area 23 could be more or less emphasized with respect to the asymmetry of the radial section of the rim 22 at each hole 4a for the attachment of the central spoke 4 of each triplet, and also the radial section of the rim 22 at the centre of each infra-spoke area 23 could be symmetrical.

FIG. 16 shows a wheel 31 with a rim 32 according to a third embodiment of the invention.

The wheel 31 is a front wheel with twenty-four spokes 33, 34 equally spaced, tensioned between a hub M2 and twenty-four spoke attachment areas 37 of the rim 32. The rim 32 has twenty-four infra-spoke areas 38 between adjacent spoke attachment areas 37.

The twelve spokes 33 extend radially from the hub M2 on the first side A, while the twelve spokes 34 extend radially from the hub M2 on the second side B.

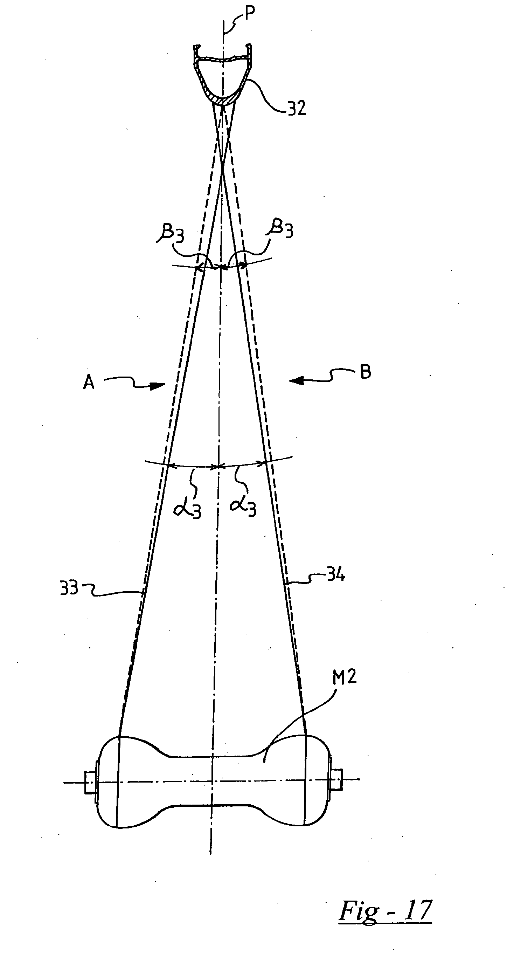

As can be observed in the section view of FIG. 17, since the hub M2 has no sprocket-carrying body, the slope of the spokes 33 on the first side A is equal to the slope of the spokes 34 on the second side B and defines camber angle α3.

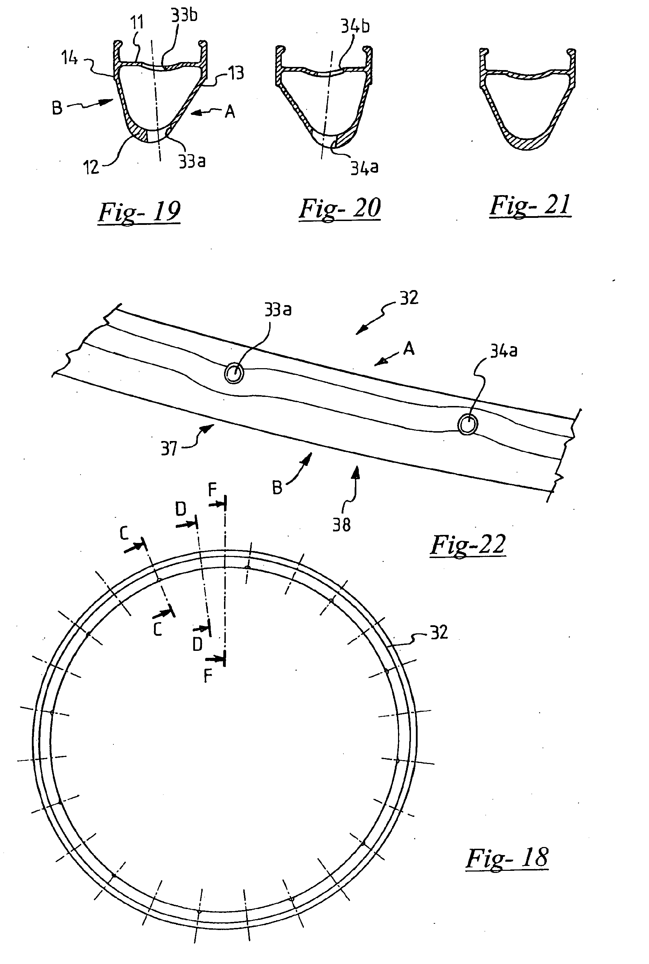

With reference to FIGS. 19-21, which show radial sections of the rim 32, respectively along the planes C-C, D-D, F-F of FIG. 18, the rim 32 has a variable radial section and more specifically has a change of radial section of the side walls 13, 14. In the spoke attachment areas 37, the rim 32 receives the spokes 33 on the first side A in respective holes 33a made in areas of the rim 32 that are asymmetrical, unbalanced towards the second side B of the wheel 31, as shown in FIG. 19, and the spokes 34 in respective holes 34a made in areas that are asymmetrical, unbalanced towards the first side A of the wheel 31, as shown in FIG. 20.

Similarly to the first embodiment described above, the asymmetries of the radial section of the rim 32 at the spoke attachment holes 33a, 34a allow such holes to be advantageously made displaced with respect to the middle plane P of the rim 32 to obtain a greater camber angle α3 than the camber angle β3 that there would be in the case of holes made at the middle plane P. Moreover, the described asymmetries of the rim 32 allow the spoke attachment holes 33a, 34a to be kept in the lower bridge 12, where the thickness is greater with respect to the side walls 13, 14 and therefore where the stiffness is greater.

In the upper bridge 11 of the rim 32, coaxially with the holes 33a, 34a, openings 33b, 34b for the passage of the nipples used to attach and tension the spokes 33, 34 are optionally made.

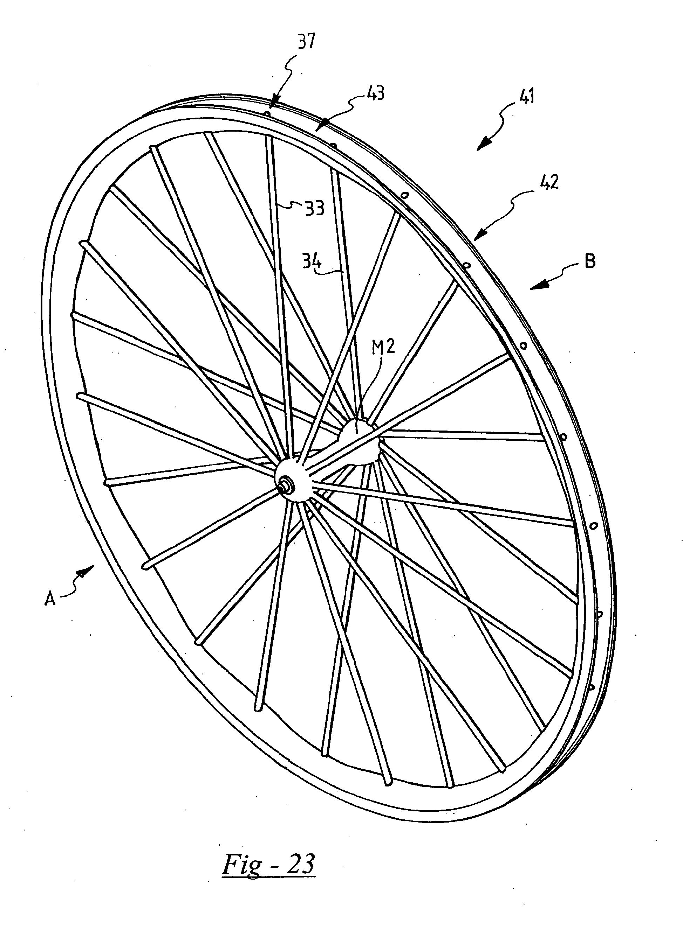

In the infra-spoke areas 38, the rim 32 has a symmetrical radial section, as shown in FIG. 21, which shows a section carried out along the plane F-F of FIG. 18.

As is more evident in FIG. 22, the radial section of the rim 32 changes between the significant sections shown in FIGS. 19-21 and described above in a gradual manner.

Although the section is variable and asymmetrical at the holes 33a, 34a, the rim 32 has an area of the cross section that is constant along the entire circumference, apart from the holes 33a, 34a themselves and the openings 33b, 34b where provided for and the other causes outlined above. Therefore, the weight of the rim 32 is evenly distributed along the entire circumference.

The wheel 31 according to the third embodiment of the invention therefore has an optimised camber value α3 through making local asymmetries of the rim 32 at the spoke attachment areas 37. Thanks to the symmetrical section of the rim 32 in the infra-spoke areas 38, which extend for a large portion of the circumference of the rim 32, the rim 32, and therefore the wheel 31, are more balanced than the wheels of the prior art with constant symmetrical or asymmetrical section.

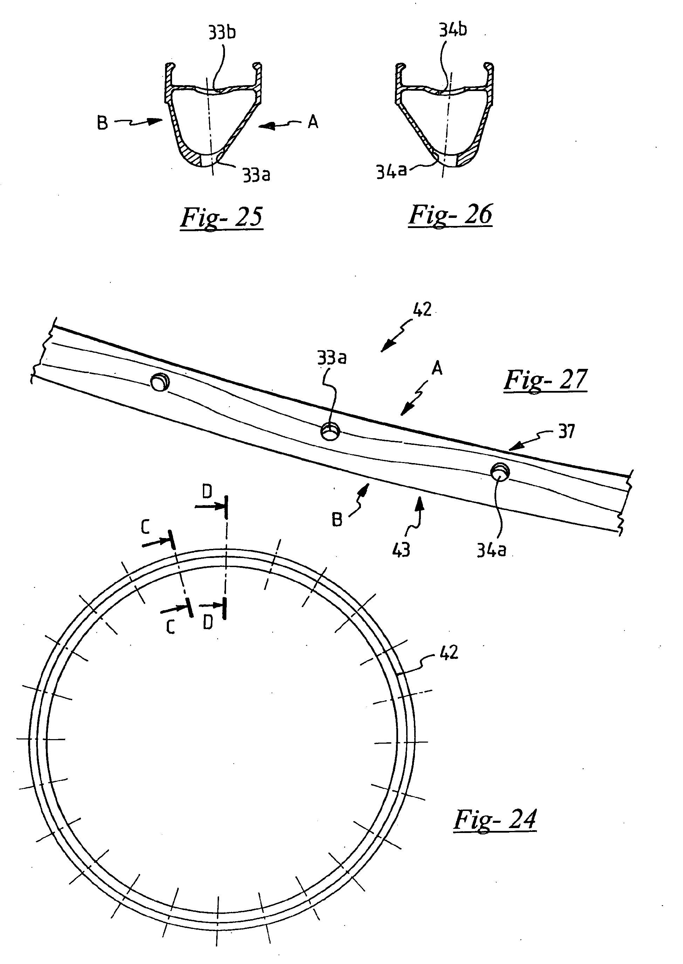

FIG. 23 shows a wheel 41 with a rim 42 according to a fourth embodiment of the invention, which differs from the third embodiment described above in that in the infra-spoke areas 43 the radial section of the rim 42 is not perfectly symmetrical. On the contrary, as can be seen in FIG. 27, in the infra-spoke areas 43 the rim 42 has a radial section changing between the asymmetrical profiles of the spoke attachment areas 37.

More specifically, at the centre of each infra-spoke area 43 the section of the rim 42 (not shown, but equivalent to that shown in FIG. 7) is symmetrical; such a section changes continually on either side of each infra-spoke area 43 filleting with the sections at the holes 33a, 34a for the attachment of the spokes 33, 34, said sections being shown in FIGS. 25 and 26, respectively.

In each infra-spoke area 43, the section of the rim 42 therefore advantageously has an overall balanced progression. Also in the case of the fourth embodiment, the area of the sections of the spoke attachment areas 37 and the area of the sections of the infra-spoke areas 43 all have the same value, apart from the holes 33a, 34a and the openings 33b, 34b where provided for and the other causes outlined above. The weight of the rim 42 is therefore evenly distributed along its circumference.

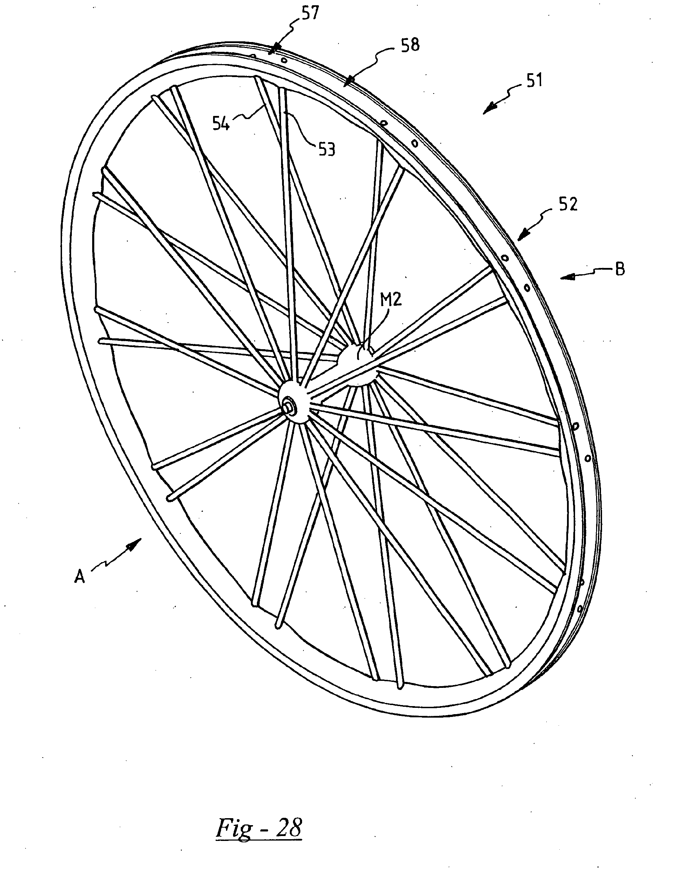

FIG. 28 shows a wheel 51 with a rim 52 according to a fifth embodiment of the invention.

The wheel 51 is a front wheel with twelve pairs of spokes 53, 54, tensioned between a hub M2 and twelve spoke attachment areas 57 of the rim 52. The rim 52 has twelve infra-spoke areas 58 between adjacent spoke attachment areas 57.

The twelve spokes 53 extend radially from the hub M2 on the first side A, while the twelve spokes 54 extend radially from the hub M2 on the second side B.

Also in this case, since the hub M2 has no sprocket-carrying body, the slope of the spokes 53 on the first side A is equal to the slope of the spokes 54 on the second side B and defines the camber angle α3 shown in FIG. 17.

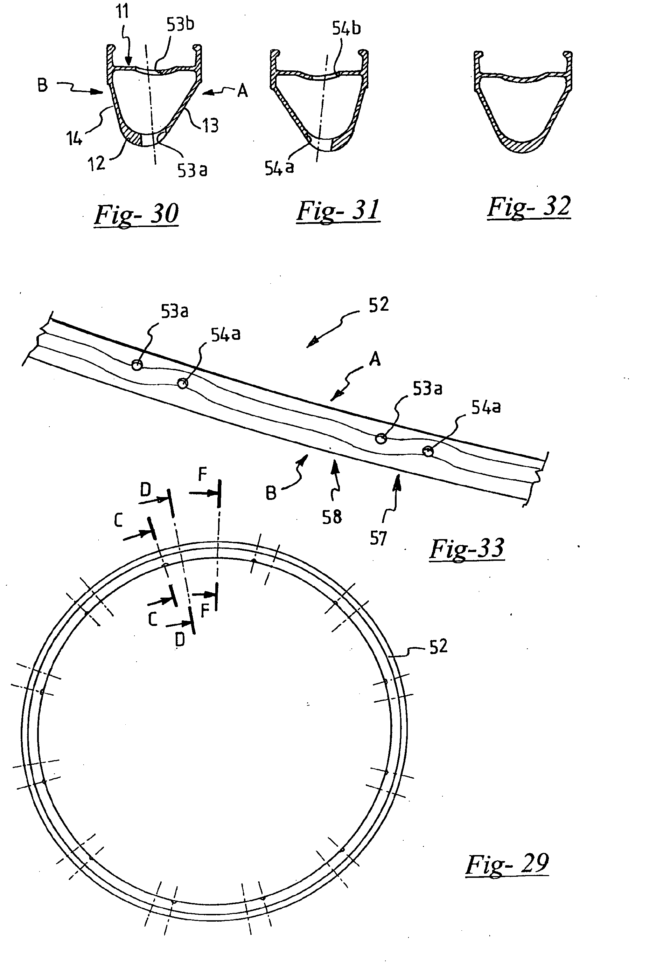

With reference to FIGS. 30-32, which show radial sections of the rim 52, respectively along the planes C-C, D-D, F-F of FIG. 29, the rim 52 has a variable radial section and more specifically has a change of radial section of the side walls 13, 14. In the spoke attachment areas 57, the rim 52 receives the spokes 53 on the first side A in respective holes 53a made in areas of the rim 52 that are asymmetrical, unbalanced towards the second side B of the wheel 51, as shown in FIG. 30, and the spokes 54 in respective holes 54a made in areas that are asymmetrical, unbalanced towards the first side A of the wheel 51, as shown in FIG. 31.

Similarly to the first embodiment described above and again with reference to FIG. 17, the asymmetries of the radial section of the rim 52 at the spoke attachment holes 53a, 54a allow such holes to be advantageously made displaced with respect to the middle plane P of the rim 32 to obtain a greater camber angle α3 than the camber angle β3 that there would be in the case of holes made at the middle plane P. Moreover, the described asymmetries of the rim 52 allow the spoke attachment holes 53a, 54a to be kept in the lower bridge 12, where the thickness is greater with respect to the side walls 13, 14 and therefore where the stiffness is greater.

In the upper bridge 11 of the rim 52, coaxially with the holes 53a, 54a, openings 53b, 54b for the passage of the nipples used to attach and tension the spokes 53, 54 are optionally made.

In the infra-spoke areas 58, the rim 52 has a symmetrical radial section, as shown in FIG. 32, which shows a section carried out along the plane F-F of FIG. 29.

As is more evident in FIG. 33, the radial section of the rim 52 changes between the significant sections shown in FIGS. 30-32 and described above in a gradual manner.

Although the section is variable and asymmetrical at the holes 53a, 54a, the rim 52 has an area of the cross section that is constant along the entire circumference, apart from the holes 53a, 54a themselves and the openings 53b, 54b where provided for and the other causes outlined above. Therefore, the weight of the rim 52 is evenly distributed along the entire circumference.

The wheel 51 according to the fifth embodiment of the invention therefore has an optimised camber value α3 through making the local asymmetries of the rim 52 at the spoke attachment areas 57. Thanks to the symmetrical section of the rim 52 in the infra-spoke areas 58, which extend for a large portion of the circumference of the rim 52, the rim 52, and therefore the wheel 51, are also more balanced than the wheels of the prior art with constant symmetrical or asymmetrical section.

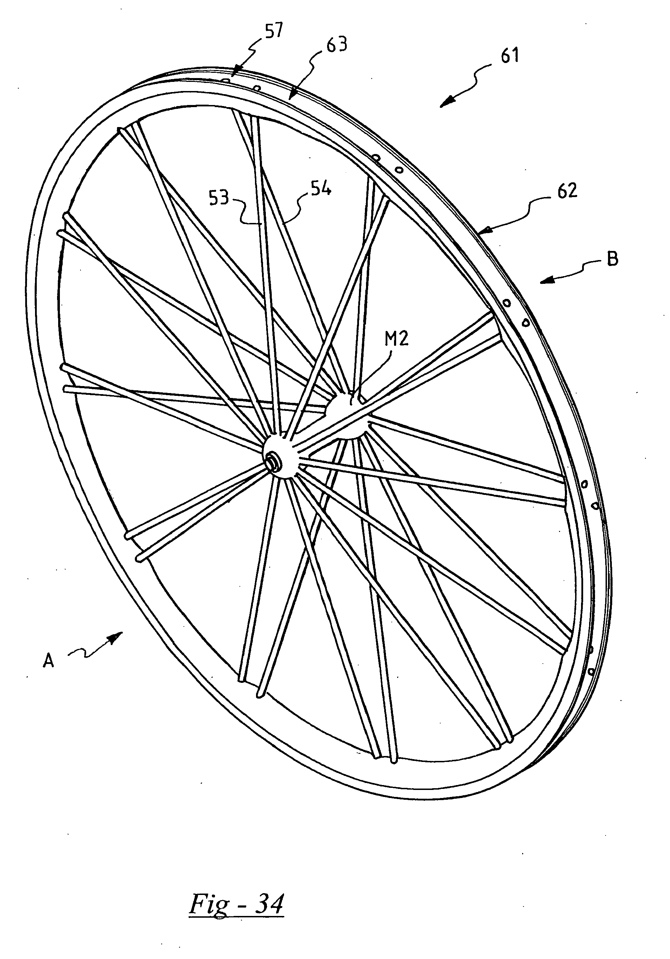

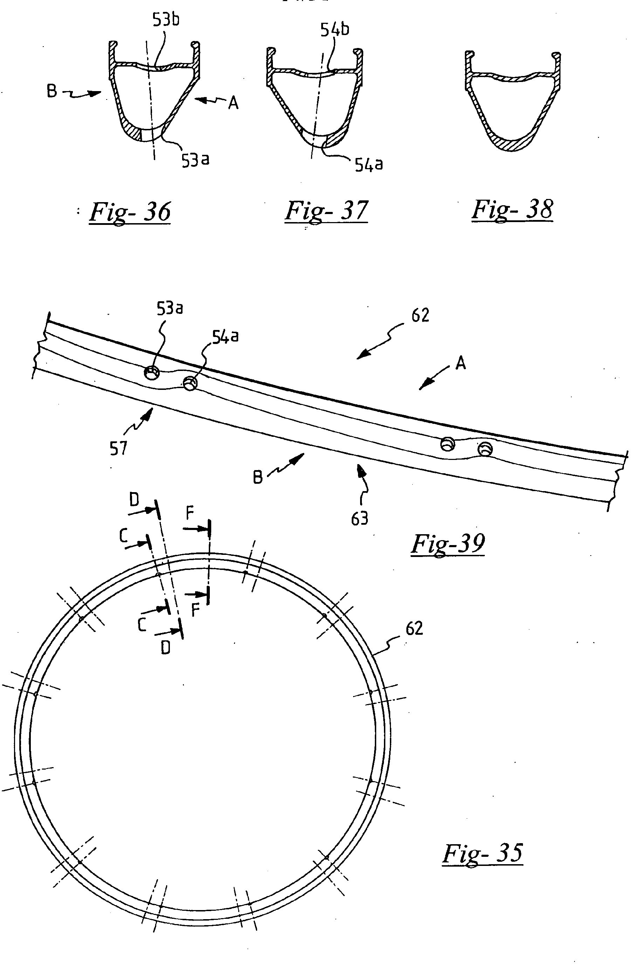

FIG. 34 shows a wheel 61 with a rim 62 according to a sixth embodiment of the invention, which differs from the fifth embodiment described above in that in the infra-spoke areas 63 the radial section of the rim 62 is not perfectly symmetrical. On the contrary, as is more evident in FIG. 39, in the infra-spoke areas 63 the rim 62 has a radial section changing between the asymmetrical profiles of the spoke attachment areas 57.

More specifically, at the centre of each infra-spoke area 63 the section of the rim 62, shown in FIG. 38, is symmetrical; such a section changes continually on either side of each infra-spoke area 63 filleting with the sections at the holes 53a, 54a for the attachment of the spokes 53, 54, said sections being shown in FIGS. 36 and 37, respectively.

In each infra-spoke area 63, the section of the rim 62 therefore advantageously has an overall balanced progression. Also in the case of the sixth embodiment, the area of the sections of the spoke attachment areas 57 and the area of the sections of the infra-spoke areas 63 all have the same value, apart from the holes 53a, 54a and the openings 53b, 54b where provided for and the other causes outlined above. The weight of the rim 62 is therefore evenly distributed along its circumference.

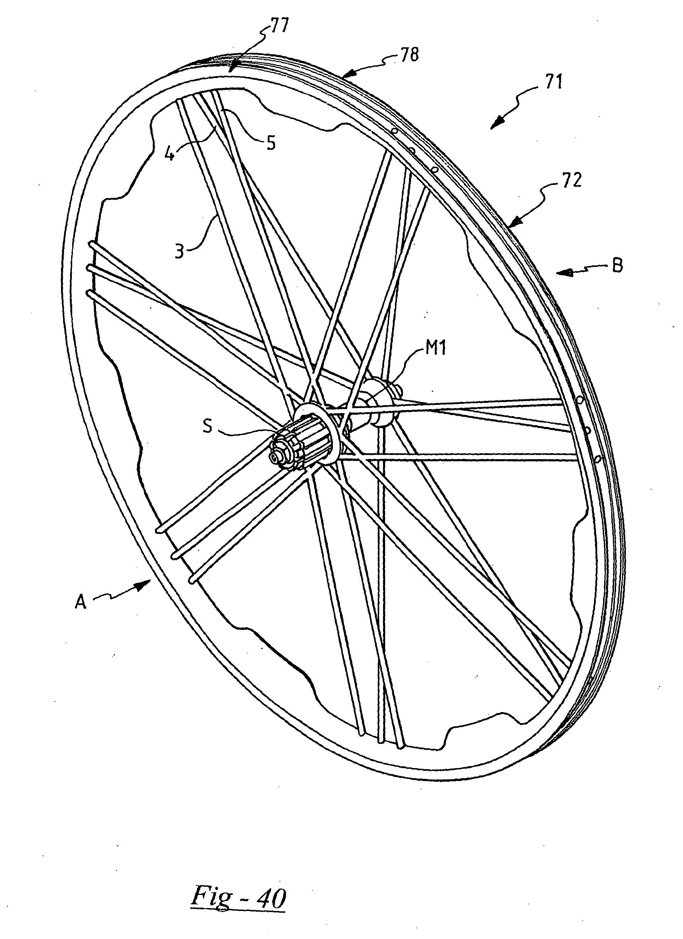

FIG. 40 shows a wheel 71 with a rim 72 according to a seventh embodiment of the invention.

The wheel 71 is a rear wheel having the same spoking as the first embodiment described above. The wheel 71 indeed comprises seven triplets each comprising three spokes 3, 4, 5 tensioned between a hub M1 and seven spoke attachment areas 77 of the rim 72. Between adjacent spoke attachment areas 77, the rim 72 has seven infra-spoke areas 78.

The fourteen lateral spokes 3, 5 of each triplet extend tangentially from the hub M1 on the first side A, while the seven central spokes 4 of each triplet extend radially from the hub M1 on the second side B.

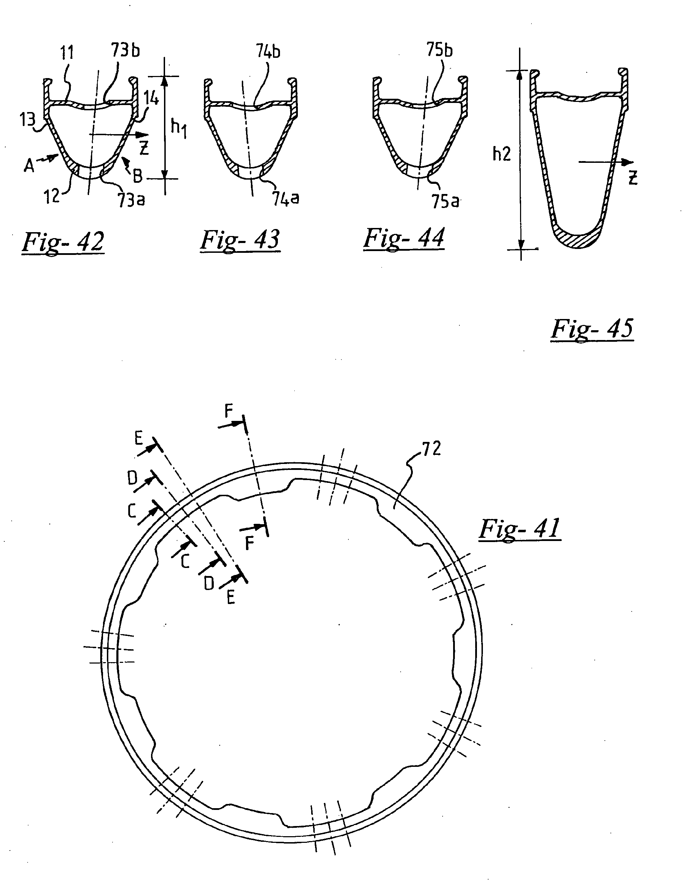

With reference to FIGS. 42-45, which show radial sections of the rim 72 respectively along the planes C-C, D-D, E-E, F-F of FIG. 41, the rim 72 has a variable radial section and more specifically has a change of radial section of the side walls 13, 14. In the spoke attachment areas 77, the rim 72 has a symmetrical section, of comparatively short radial extent h1. For example, the radial extent h1 of the rim 72 in the spoke attachment areas 77 can amount to 26 mm.

More specifically, in the spoke attachment areas 77 the rim 72 receives the lateral spokes 3, 5 of each triplet in respective holes 73a, 75a centred about the middle plane P, but slightly sloping towards the second side B of the wheel 71, as shown in FIGS. 42, 44 respectively. Again in the spoke attachment areas 77, the rim 72 receives the central spoke 4 of each triplet in a respective hole 74a centred about the middle plane P, but slightly sloping towards the first side A of the wheel 71, as shown in FIG. 43.

The spoke attachment holes 73a, 74a, 75a are therefore made in the lower bridge 12, where the thickness is greater with respect to the side walls 13, 14 and therefore where the stiffness is greater.

In the upper bridge 11 of the rim 72, coaxially with the holes 73a, 74a, 75a, openings 73b, 74b, 75b for the passage of the nipples used to attach and tension the spokes 3, 4, 5 are optionally made. The openings are displaced with respect to the middle plane P, in particular the openings 73b, 75b for the lateral spokes 3, 5 of each triplet are displaced towards the second side B of the wheel 71, and the openings 74b for the central spokes 4 of each triplet are displaced towards the first side A of the wheel 71.

In the infra-spoke areas 78, the rim 72 has a symmetrical radial section, of comparatively long radial extent h2, as shown in FIG. 45, which shows a section carried out along the plane F-F of FIG. 41. More specifically, in the infra-spoke areas 78 the side walls 13, 14 are longer than the spoke attachment areas 77. For example, the radial extent h2 of the rim 72 in the infra-spoke areas 78 can amount to 45 mm.

As can be seen in FIG. 40, the radial section of the rim 72 changes between the significant sections shown in FIGS. 42-45 and described above in a gradual manner.

Although the section is variable, the rim 72 has an area of the cross section - namely of the upper bridge 11, of the lower bridge 12 and of the side walls 13, 14 - that is constant along the entire circumference, apart from the holes 73a, 74a, 75a themselves and the openings 73b, 74b, 75b where provided for and the other causes outlined above. Therefore, the weight of the rim 72 is evenly distributed along the entire circumference.

Each infra-spoke area 78, still having substantially the same area of the section of each spoke attachment area 77, has a moment of inertia, with respect to the neutral axis z, that is greater than the moment of inertia of each spoke attachment area 77. Under neutral axis z, the location of the points where the stresses that would generate a flexural deformation of the section of the rim are zero is meant.

In the rim 72, therefore, still preserving the constant weight distribution along the circumference, there is an improvement of the stiffness of the rim 72 in the infra-spoke areas 78 caused precisely by the increased moment of inertia with respect to the axis z due to the increased radial size of the rim 72, compared with the spoke attachment areas 77. The increased moment of inertia in the infra-spoke areas 78 allows the radial deformation in the infra-spoke areas 78 themselves of the rim 72 to be reduced when the spokes 3, 4, 5 are mounted between the rim 72 and the hub M1 and tensioned to make the wheel 71, with a consequent reduction of the daisy effect described in the introductory part of the present description.

It should be understood that, in order to obtain a perfectly balanced rim, also based upon the diameter and/or number of groups of spokes 3-5, the change of radial extent of the rim 72 in each infra-spoke area 78 could extend for a greater or smaller part of the infra-spoke area 78 itself, even also along the entire infra-spoke area 78, in other words the section of maximum radial extent h2 could be only at the centre of each infra-spoke area 78.

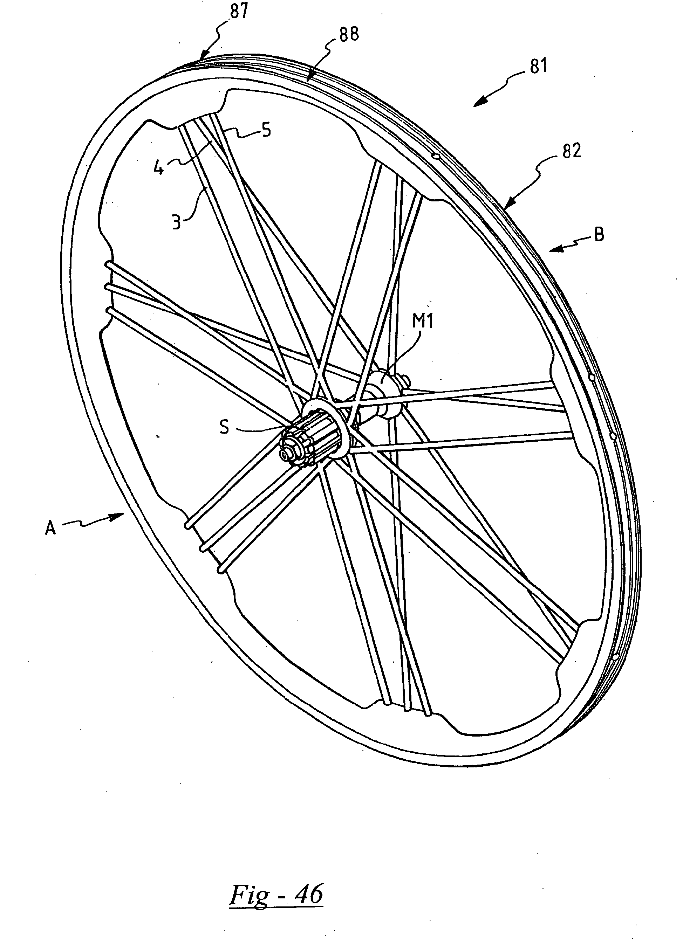

FIG. 46 shows a wheel 81 with a rim 82 according to an eighth embodiment of the invention.

The wheel 81 is a rear wheel having the same spoking as the first embodiment and as the seventh embodiment just described. The wheel 81 indeed comprises seven triplets each comprising three spokes 3, 4, 5 tensioned between a hub M1 and seven spoke attachment areas 87 of the rim 82. Between adjacent spoke attachment areas 87, the rim 82 has seven infra-spoke areas 88.

The fourteen lateral spokes 3, 5 of each triplet extend tangentially from the hub M1 on the first side A, while the seven central spokes 4 of each triplet extend radially from the hub M1 on the second side B.

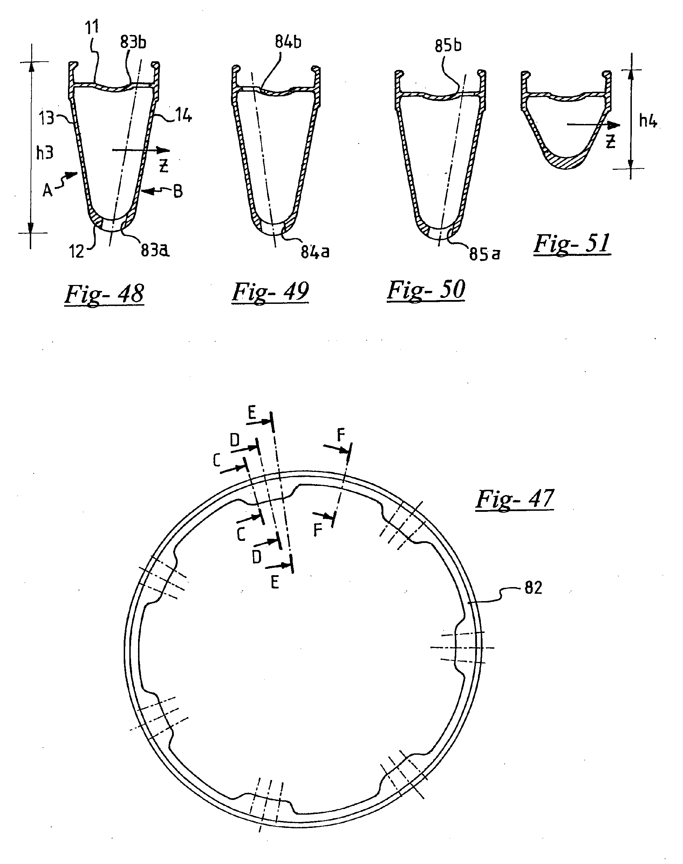

With reference to FIGS. 48-51, which show radial sections of the rim 82 respectively along the planes C-C, D-D, E-E, F-F of FIG. 47, the rim 82 has a variable radial section, and more specifically has a change of radial section of the side walls 13, 14. In the spoke attachment areas 87, the rim 82 has a symmetrical section, of comparatively long radial extent h3. For example, the radial extent h3 of the rim 82 in the spoke attachment areas -87 can amount to 45 mm.

More specifically, in the spoke attachment areas 87 the rim 82 receives the lateral spokes 3, 5 of each triplet in respective holes 83a, 85a centred about the middle plane P, but slightly sloping towards the first side A of the wheel 81, as shown in FIGS. 48, 50 respectively. Again in the spoke attachment areas 87, the rim 82 receives the central spoke 4 of each triplet in a respective hole 84a centred about the middle plane P, but slightly sloping towards the second side B of the wheel 81, as shown in FIG. 49.

The spoke attachment holes 83a, 84a, 85a are therefore made in the lower bridge 12, where the thickness is greater with respect to the side walls 13, 14 and therefore where the stiffness is greater.

In the upper bridge 11 of the rim 82, coaxially with the holes 83a, 84a, 85a, openings 83b, 84b, 85b for the passage of the nipples used to attach and tension the spokes 3, 4, 5 are optionally made.

In the infra-spoke areas 88, the rim 82 has a symmetrical radial section, of comparatively short radial extent h4, as shown in FIG. 51, which shows a section carried out along the plane F-F of FIG. 47. More specifically, in the infra-spoke areas 88 the side walls 13, 14 are shorter and more sloping than in the spoke attachment areas 87. For example, the radial extent h4 of the rim 82 in the infra-spoke areas 88 can amount to 26 mm.

As can be seen in FIG. 46, the radial section of the rim 82 changes between the significant sections shown in FIGS. 48-51 and described above in a gradual manner.

Although the section is variable, the rim 82 has an area of the cross section - namely of the upper bridge 11, the lower bridge 12 and the side walls 13, 14 - that is constant along the entire circumference, apart from the holes 83a, 84a, 85a themselves and the openings 83b, 84b, 85b where provided for, and the other causes outlined above. Therefore, the weight of the rim 82 is evenly distributed along the entire circumference.

Each spoke attachment area 87, still having substantially the same area of the section of each infra-spoke area 88, has a moment of inertia, with respect to the neutral axis z, that is greater than the moment of inertia of each infra-spoke area 88.

In the rim 82, therefore, still preserving the constant weight distribution along the circumference, there is an improvement of the stiffness of the rim 82 in the spoke attachment areas 87 caused precisely by the increased moment of inertia with respect to the axis z due to the increased radial size of the rim 82, compared with the infra-spoke areas 88. The increased moment of inertia in the spoke attachment areas 87 allows the radial deformation to be reduced in the spoke attachment areas 87 when the spokes 3, 4, 5 are mounted between the rim 82 and the hub M1 and tensioned to make the wheel 81, with a consequent reduction of the daisy effect.

Also in the case of the eighth embodiment, in order to obtain a perfectly balanced rim, also based upon the diameter and/or the number of groups of spokes 3-5, the change of radial extent of the rim 81 in each infra-spoke area 88 could extend for a greater or lesser part of the infra-spoke area 88 itself, even also along the entire infra-spoke area 88, in other words the section of minimum radial extent h4 would be only at the centre of each infra-spoke area 128.

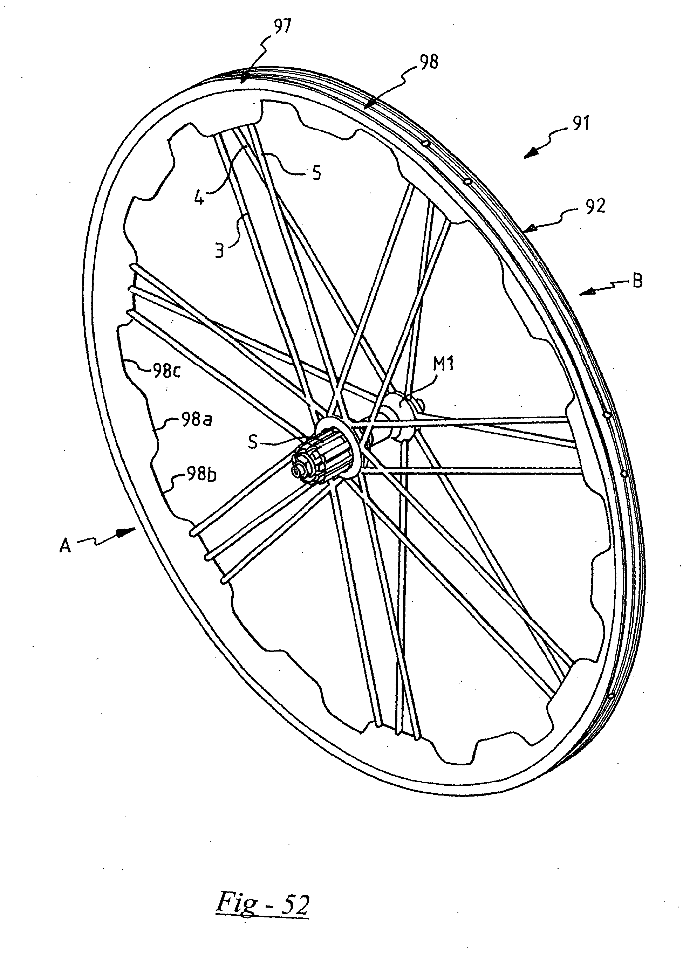

FIG. 52 shows a wheel 91 with a rim 92 according to a ninth embodiment of the invention.

The wheel 91 is a rear wheel having the same spoking as the first, second, seventh and eighth embodiments described above. The wheel 91 indeed comprises seven triplets each comprising three spokes 3, 4, 5 tensioned between a hub M1 and seven spoke attachment areas 97 of the rim 92. Between adjacent spoke attachment areas 97, the rim 92 has seven infra-spoke areas 98.

The fourteen lateral spokes 3, 5 of each triplet extend tangentially from the hub M1 on the first side A, while the seven central spokes 4 of each triplet extend radially from the hub M1 on the second side B.

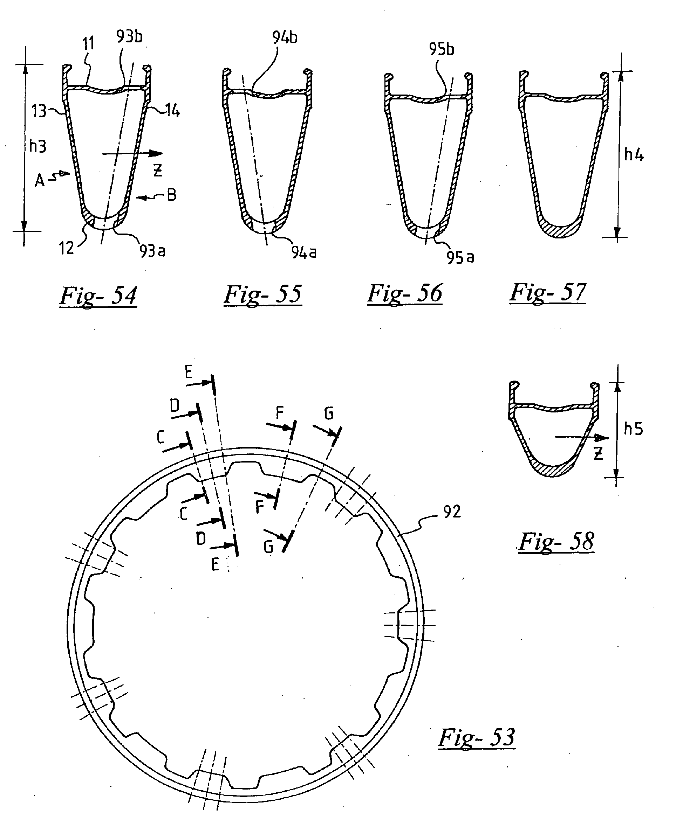

With reference to FIGS. 54-58, which show radial sections of the rim 92 respectively along the planes C-C, D-D, E-E, F-F, G-G of FIG. 53, the rim 92 has a variable radial section, and more specifically has a change of radial section of the side walls 13, 14. In the spoke attachment areas 97, the section of the rim 92 is the same as the section of the rim 81 of the eighth embodiment, namely symmetrical and of comparatively long radial extent h3, for example 45 mm.

More specifically, in the spoke attachment areas 97 the rim 92 receives the lateral spokes 3, 5 of each triplet in respective holes 93a, 95a centred about the middle plane P, but slightly sloping towards the first side A of the wheel 91, as shown in FIGS. 54, 56 respectively, and receives the central spoke 4 of each triplet in a respective hole 94a centred about the middle plane P, but slightly sloping towards the second side B of the wheel 91, as shown in FIG. 55.

The spoke attachment holes 93a, 94a, 95a are made in the lower bridge 12, where the thickness is greater with respect to the side walls 13, 14 and therefore where the stiffness is greater.

In the upper bridge 11 of the rim 92, coaxially with the holes 93a, 94a, 95a, openings 93b, 94b, 95b for the passage of the nipples used to attach and tension the spokes 3, 4, 5 are optionally made.

In the infra-spoke areas 98, the rim 92 has a radial section that is symmetrical, but changing between a radial section of comparatively long radial extent h4, for example 45 mm, in a central part 98a of each infra-spoke area 98, as shown in FIG. 57, which shows a section carried out along the plane F-F of FIG. 53, and a radial section of comparatively short radial extent h5 in two lateral parts 98b, 98c of each infra-spoke area 98, as shown in FIG. 58, which shows a section carried out along the plane G-G of FIG. 53.

More specifically, in the central part 98a of each infra-spoke area 98 the side walls 13, 14 are as long as in the spoke attachment areas 97, while in the lateral parts 98b, 98c of each infra-spoke area 98, the side walls 13, 14 are shorter than in the spoke attachment areas 97.

It should however be understood that the section in the central part 98a of the infra-spoke areas 98 (FIG. 58) could be different both in shape and in size from the section at the spoke attachment areas 97.

As can be seen in FIG. 52, the radial section of the rim 92 changes between the significant sections shown in FIGS. 54-58 and described above in a gradual manner.

Although the section is variable, the rim 92 has an area of the cross section - namely of the upper bridge 11, of the lower bridge 12 and of the side walls 13, 14 - that is constant along the entire circumference, apart from the holes 93a, 94a, 95a themselves and the openings 93b, 94b, 95b where provided for and the other causes outlined above. Therefore, the weight of the rim 92 is evenly distributed along the entire circumference.

Each spoke attachment area 97 and the central part 98a of each infra-spoke area 98 have a moment of inertia, with respect to the neutral axis z, that is greater than the moment of inertia of the lateral parts 98b, 98c of each infra-spoke area 98.

In the rim 92, therefore, still preserving the constant weight distribution along the circumference, there is an improvement of the stiffness of the rim 92 in the spoke attachment areas 97 and in the central part 98a of the infra-spoke areas 98, caused precisely by the increased moment of inertia with respect to the axis z due to the increased radial size of the rim 92, compared with the lateral parts 98b, 98c of the infra-spoke areas 98.

The increased moment of inertia in the spoke attachment area 97 and in the central part 98a of each infra-spoke area 98 allows the radial deformation of such areas and consequently of the entire infra-spoke areas 98 to be reduced when the spokes 3, 4, 5 are mounted between the rim 92 and the hub M1 and tensioned to make the wheel 91, with a consequent reduction of the daisy effect.

Experimental tests have confirmed that the lateral parts 98b, 98c of the infra-spoke areas 98 are subject to less stress than the central part 98a of the infra-spoke areas 98 and than the spoke attachment areas 97 during the tensioning of the spokes, for which reason the rim 92 in such lateral parts 98b, 98c of the infra-spoke areas 98 can advantageously have a lesser moment of inertia than the adjacent spoke attachment areas 97 and than the central parts 98a of the infra-spoke areas 98.

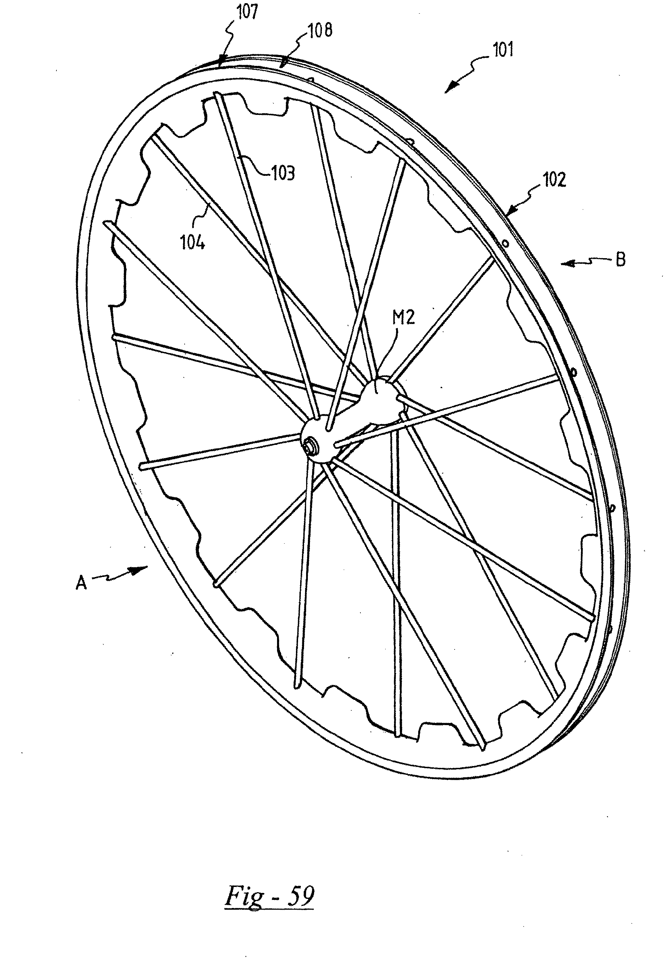

FIG. 59 shows a wheel 101 with a rim 102 according to a tenth embodiment of the invention.

The wheel 101 is a front wheel with sixteen spokes 103, 104 equally spaced apart, tensioned between a hub M2 and sixteen spoke attachment areas 107 of the rim 102. The rim 102 has sixteen infra-spoke areas 108 between adjacent spoke attachment areas 107.

The eight spokes 103 extend radially from the hub M2 on the first side A, while the eight spokes 104 extend radially from the hub M2 on the second side B.

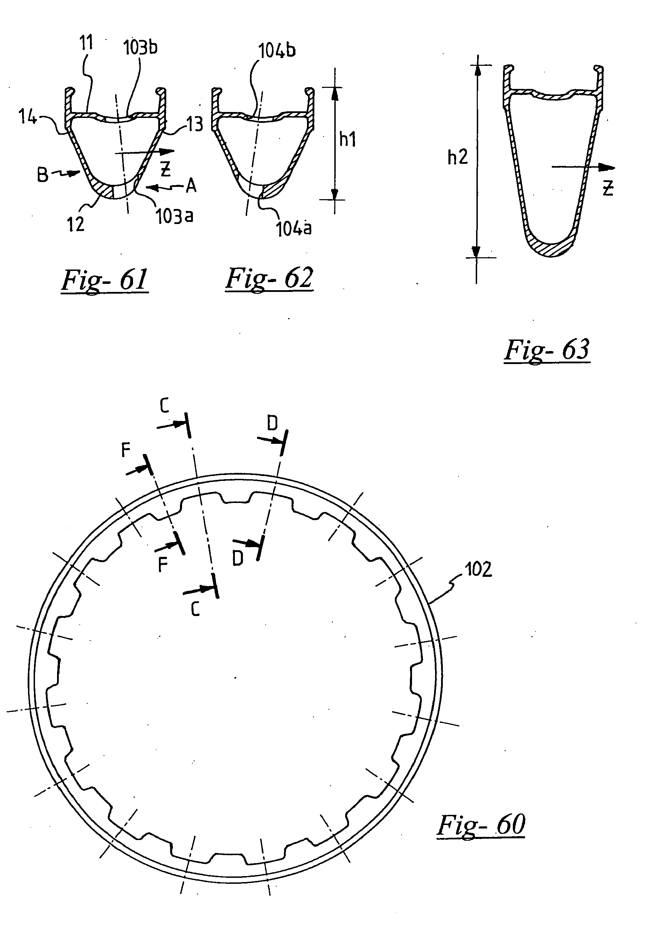

With reference to FIGS. 61-63, which show radial sections of the rim 102, respectively along the planes C-C, D-D, F-F of FIG. 60, the rim 102 has a variable radial section, and more specifically has a change of radial section of the side walls 13, 14. In the spoke attachment areas 107, the rim 102 has a symmetrical section, of comparatively short radial extent h1. For example, the radial extent h1 of the rim 72 in the spoke attachment areas 107 can amount to 26 mm.

More specifically, in the spoke attachment areas 107 the rim 102 receives the spokes 103 on the first side A in respective holes 103a slightly sloping towards the first side A of the wheel 101, as shown in FIG. 61, and the spokes 104 in respective holes 104a slightly sloping towards the second side B of the wheel 101, as shown in FIG. 62.

The spoke attachment holes 103a, 104a are made in the lower bridge 12, though not centred, where the thickness is greater with respect to the side walls 13, 14 and therefore where the stiffness is greater. Alternatively, the holes 103a, 104a could be made centred as shown for example in FIGS. 42, 43.

In the upper bridge 11 of the rim 2, coaxially with the holes 103a, 104a, openings 103b, 104b for the passage of the nipples used to attach and tension the spokes 103, 104 are optionally made.

In the infra-spoke areas 108, the rim 102 has a symmetrical radial section, of comparatively long radial extent h2, as shown in FIG. 63, which shows a section carried out along the plane F-F of FIG. 60. More specifically, in the infra-spoke areas 108 the side walls 13, 14 are longer than the spoke attachment areas 107. For example, the radial extent h2 of the rim 102 in the infra-spoke areas 108 can amount to 45 mm.

As can be seen in FIG. 59, the radial section of the rim 102 changes between the significant sections shown in FIGS. 61-63 and described above in a gradual manner.

Although the section is variable, the rim 102 has an area of the cross section - namely of the upper bridge 11, of the lower bridge 12 and of the side walls 13, 14 - that is constant along the entire circumference, apart from the holes 103a, 104a themselves and the openings 103b, 104b where provided for. Therefore, the weight of the rim 102 is evenly distributed along the entire circumference.

Each infra-spoke area 108, still having substantially the same area of the section of each spoke attachment area 107, has a moment of inertia, with respect to the neutral axis z, that is greater than the moment of inertia of each spoke attachment area 107.

In the rim 102, therefore, still preserving the constant weight distribution along the circumference, there is an improvement of the stiffness of the rim 102 in the infra-spoke areas 108 caused precisely by the increased moment of inertia with respect to the axis z due to the increased radial size of the rim 102, compared with the spoke attachment areas 107. The increased moment of inertia in the infra-spoke areas 108 allows the radial deformation to be reduced in the infra-spoke areas 108 themselves of the rim 102 when the spokes 103, 104 are mounted between the rim 102 and the hub M2 and tensioned to make the wheel 101, with a consequent reduction of the daisy effect.

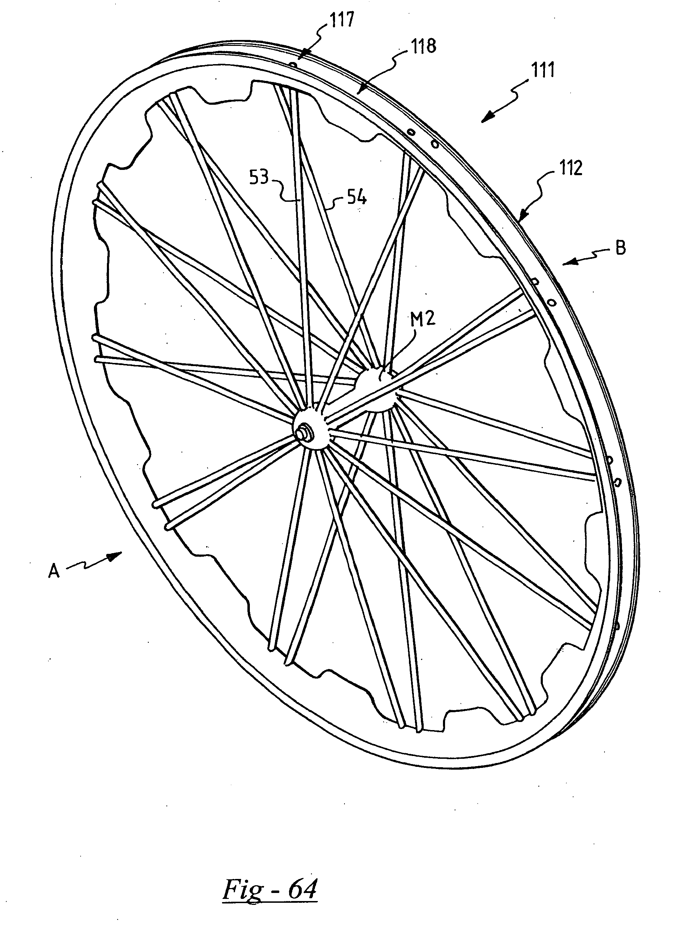

FIG. 64 shows a wheel 111 with a rim 112 according to an eleventh embodiment of the invention, which has the same spoking as the wheel 51 according to the fifth embodiment of the invention described above with reference to FIG. 28.

The wheel 111 is indeed a front wheel with twelve pairs of spokes 53, 54, tensioned between a hub M2 and twelve spoke attachment areas 117 of the rim 112. The rim 112 has twelve infra-spoke areas 118 between adjacent spoke attachment areas 117.

The twelve spokes 53 extend radially from the hub M2 on the first side A, while the twelve spokes 54 extend radially from the hub M2 on the second side B.

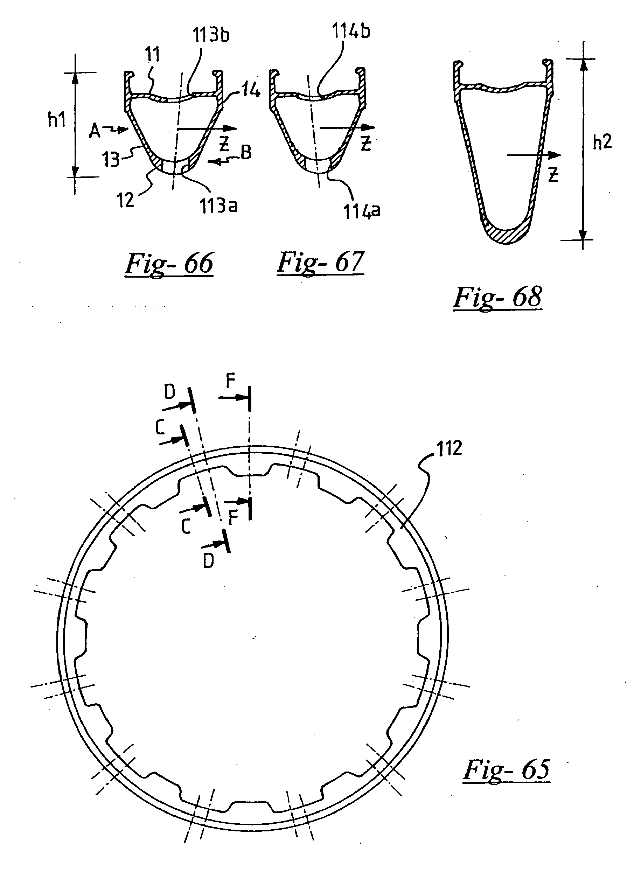

With reference to FIGS. 66-68, which show radial sections of the rim 112, respectively along the planes C-C, D-D, F-F of FIG. 65, the rim 112 has a variable radial section, and more specifically has a change of radial section of the side walls 13, 14. In the spoke attachment areas 117, the rim 112 has a symmetrical section, of comparatively short radial extent h1. For example, the radial extent h1 of the rim 112 in the spoke attachment areas 117 can amount to 26 mm.

More specifically, in the spoke attachment areas 117 the rim 112 receives the spokes 53 on the first side A in respective holes 113a centred about the middle plane P, but slightly sloping towards the first side A of the wheel 111, as shown in FIG. 66, and the spokes 54 in respective holes 114a centred about the middle plane P, but slightly sloping towards the second side B of the wheel 111, as shown in FIG. 67.

The spoke attachment holes 113a, 114a are therefore made in the lower bridge 12, where the thickness is greater with respect to the side walls 13, 14 and therefore where the stiffness is greater.

In the upper bridge 11 of the rim 112, coaxially with the holes 113a, 114a, openings 113b, 114b for the passage of the nipples used to attach and tension the spokes 113, 114 are optionally made.

In the infra-spoke areas 118, the rim 112 has a symmetrical radial section, of comparatively long radial extent h2, as shown in FIG. 68, which shows a section carried out along the plane F-F of FIG. 65. More specifically, in the infra-spoke areas 118 the side walls 13, 14 are longer than in the spoke attachment areas 117. For example, the radial extent h2 of the rim 112 in the infra-spoke areas 118 can amount to 45 mm.

As can be seen in FIG. 64, the radial section of the rim 112 changes between the significant sections shown in FIGS. 66-68 and described above in a gradual manner.

Although the section is variable, the rim 112 has an area of the cross section - namely of the upper bridge 11, of the lower bridge 12 and of the side walls 13, 14 - that is constant along the entire circumference, apart from the holes 113a, 114a themselves and the openings 113b, 114b where provided for and the other causes outlined above. Therefore, the weight of the rim 112 is evenly distributed along the entire circumference.

Each infra-spoke area 118, still having substantially the same area of the section as each spoke attachment area 117, has a moment of inertia, with respect to the neutral axis z, that is greater than the moment of inertia of each spoke attachment area 117.

In the rim 112, therefore, still preserving the constant weight distribution along the circumference, there is an improvement in the stiffness of the rim 112 in the infra-spoke areas 118 caused precisely by the increased moment of inertia with respect to the axis z due to the increased radial size of the rim 112, compared with the spoke attachment areas 117. The increased moment of inertia in the infra-spoke areas 118 allows the radial deformation to be reduced in the infra-spoke areas 118 themselves of the rim 112 when the spokes 53, 54 are mounted between the rim 112 and the hub M2 and tensioned to make the wheel 111, with a consequent reduction of the daisy effect.

The changes of section in terms of asymmetry described with reference to the first six embodiments can of course be combined with the changes of section in terms of radial extent described with reference to the embodiments from the seventh to the eleventh, so as to obtain a rim - and a wheel - that combines the described advantageous characteristics of optimal camber angles, optimal stiffness and evenly distributed weight along the entire circumference.

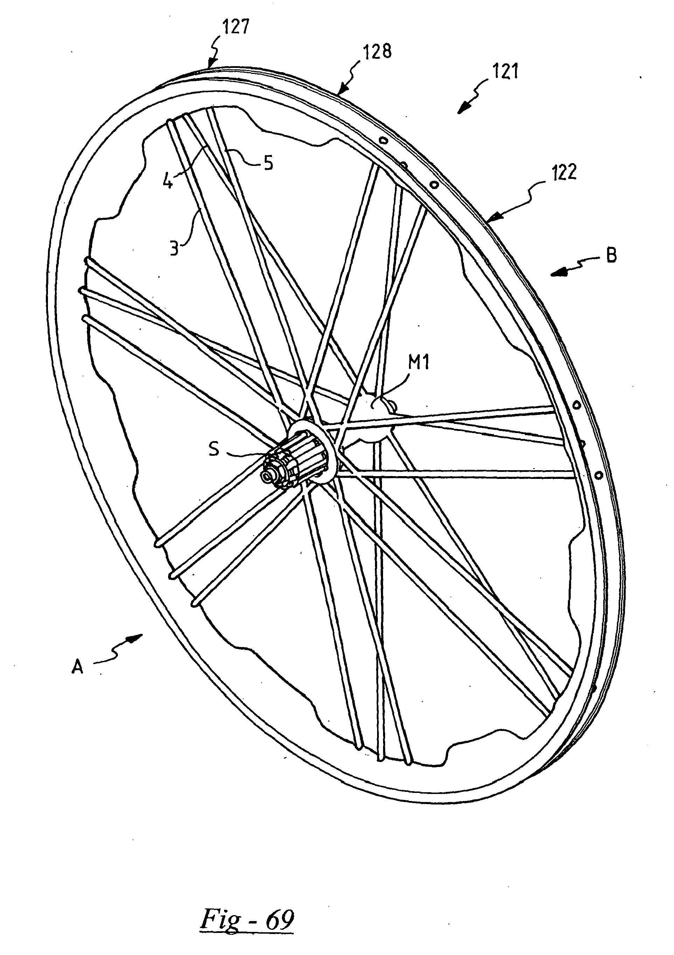

FIG. 69 shows a wheel 121 with a rim 122 according to a twelfth embodiment of the invention, merely as an example of one of the many aforementioned combinations.

The wheel 121 is a rear wheel having the same spoking as the first and seventh embodiment described above, among others. The wheel 121 indeed comprises seven triplets each comprising three spokes 3, 4, 5 tensioned between a hub M1 and seven spoke attachment areas 127 of the rim 122. Between adjacent spoke attachment areas 127, the rim 122 has seven infra-spoke areas 128.

The fourteen lateral spokes 3, 5 of each triplet extend tangentially from the hub M1 on the first side A, while the seven central spokes 4 of each triplet extend radially from the hub M1 on the second side B.

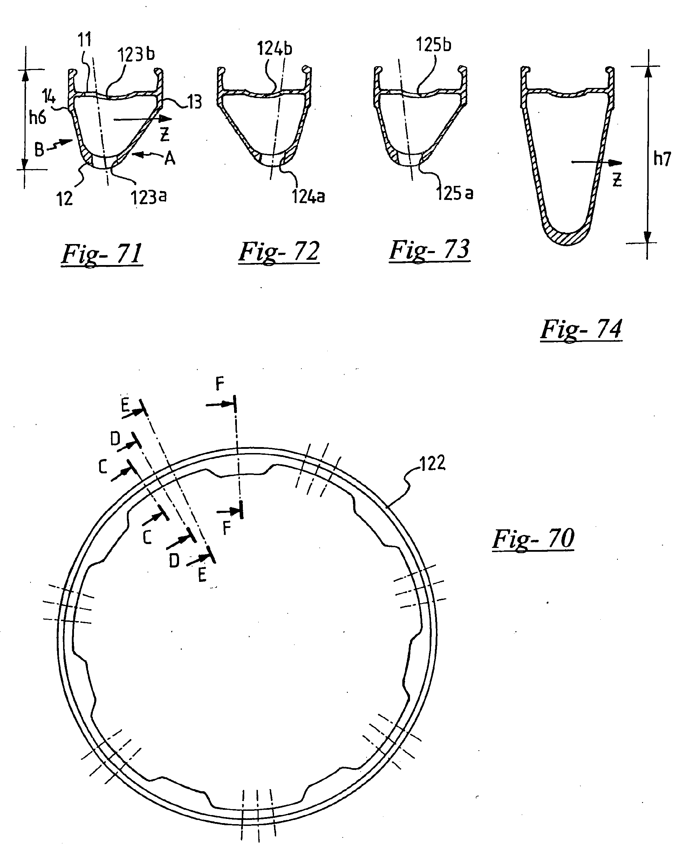

With reference to FIGS. 71-74, which show radial sections of the rim 122 respectively along the planes C-C, D-D, E-E, F-F of FIG. 70, the rim 122 has a variable radial section and more specifically has a change of radial section of the side walls 13, 14.

In the spoke attachment areas 127, the rim 122 has an asymmetrical section, of comparatively short radial extent h6. For example, the radial extent h6 of the rim 122 in the spoke attachment areas 127 can amount to 26 mm.

In the spoke attachment areas 127, the rim 122 receives the lateral spokes 3, 5 of each triplet in respective holes 123a, 125a made in areas of the rim 122 that are asymmetrical, unbalanced towards the second side B of the wheel 121, as shown in FIGS. 71, 73 respectively. More specifically, at each hole 123a, 125a and adjacent thereto, the side wall 13 on the first side A is longer and more sloping, with respect to the middle plane P, than the side wall 14 on the second side B.

Again in the spoke attachment areas 127, the rim 122 receives the central spoke 4 of each triplet in a respective hole 124a made in an area that is asymmetric, unbalanced towards the first side A of the wheel 121, as shown in FIG. 72. More specifically, at each hole 124a and adjacent thereto, the side wall 13 on the first side A is shorter and less sloping, with respect to the middle plane P, than the side wall 14 on the second side B.

Such asymmetries allow the centres of the spoke attachment holes 123a, 124a, 125a to be advantageously displaced with respect to the middle plane P of the rim 2 to obtain greater camber angles α1 and α2 than the camber angles β1, β2 that there would be in the case of holes made at the middle plane P, with reference to FIG. 2. Moreover, the described asymmetries of the rim 2 allow the spoke attachment holes 123a, 124a, 125a to be kept in the lower bridge 12, where the thickness is greater with respect to the side walls 13, 14 and therefore where the stiffness is greater.

In the upper bridge 11 of the rim 122, coaxially with the holes 123a, 124a, 125a, openings 123b, 124b, 125b for the passage of the nipples used to attach and tension the spokes 3, 4, 5 can be made.

Along the infra-spoke areas 128, the rim 122 has a symmetrical radial section of comparatively long radial extent h7, as shown in FIG. 74, which shows a section carried out along the plane F-F of FIG. 70. More specifically, in the infra-spoke areas 128 the side walls 13, 14 are longer and less sloping than the spoke attachment areas 127. For example, the radial extent h7 of the rim 122 in the infra-spoke areas 128 can amount to 45 mm.

As is more evident in FIG. 69, the radial section of the rim 122 changes between the significant sections shown in FIGS. 71-74 and described above in a gradual manner, i.e. without abrupt changes.

Although the section is variable in terms of asymmetry and of radial extent, the rim 122 has an area of the cross section - namely of the upper bridge 11, of the lower bridge 12 and of the side walls 13, 14 - that is constant along the entire circumference, apart from the holes 123a, 124a, 125a themselves and the openings 123b, 124b, 125b where provided for and the other causes outlined above. Therefore, the weight of the rim 122 is evenly distributed along the entire circumference.

The wheel 121 according to the twelfth embodiment of the invention therefore has optimised camber values α1 and α2 through making local asymmetries of the rim 122 at the spoke attachment areas 127. Thanks to the symmetry of the rim 122 in the infra-spoke areas 128, which extend for a great part of the circumference of the rim 122, the rim 122, and therefore the wheel 121, are more balanced than wheels of the prior art with constant symmetrical or asymmetrical section.

Moreover, each infra-spoke area 128, still having substantially the same area of the section as each spoke attachment area 127, has a moment of inertia, with respect to the neutral axis z, that is greater than the moment of inertia of each spoke attachment area 127. Therefore, still preserving the constant weight distribution along the circumference, there is an improvement in the stiffness of the rim 122 in the infra-spoke areas 128 caused precisely by the increased moment of inertia with respect to the axis z due to the increased radial size of the rim 122, compared with the spoke attachment areas 127. The increased moment of inertia in the infra-spoke areas 128 allows the radial deformation to be reduced in the infra-spoke areas 128 themselves of the rim 122 when the spokes 3, 4, 5 are mounted between the rim 122 and the hub M1 and tensioned to make the wheel 121, with a consequent reduction of the daisy effect described in the introductory part of the present description.

It should be understood that, in order to obtain a perfectly balanced rim, also based upon the diameter and/or the number of groups of spokes 3-5, the change of radial extent of the rim 122 in each infra-spoke area 128 could extend for a greater or smaller part of the infra-spoke area 128 itself, even also along the entire infra-spoke area 128, namely the section of maximum radial extent h7 could be only at the centre of each infra-spoke area 128.

Although up to now rims have been described in which, when the spoke attachment areas have asymmetrical radial sections (from the first to the sixth and twelfth embodiments), the spoke attachment holes are in areas of the rim unbalanced towards the side of the wheel opposite the side for the attachment of the respective spoke, this is not necessary.

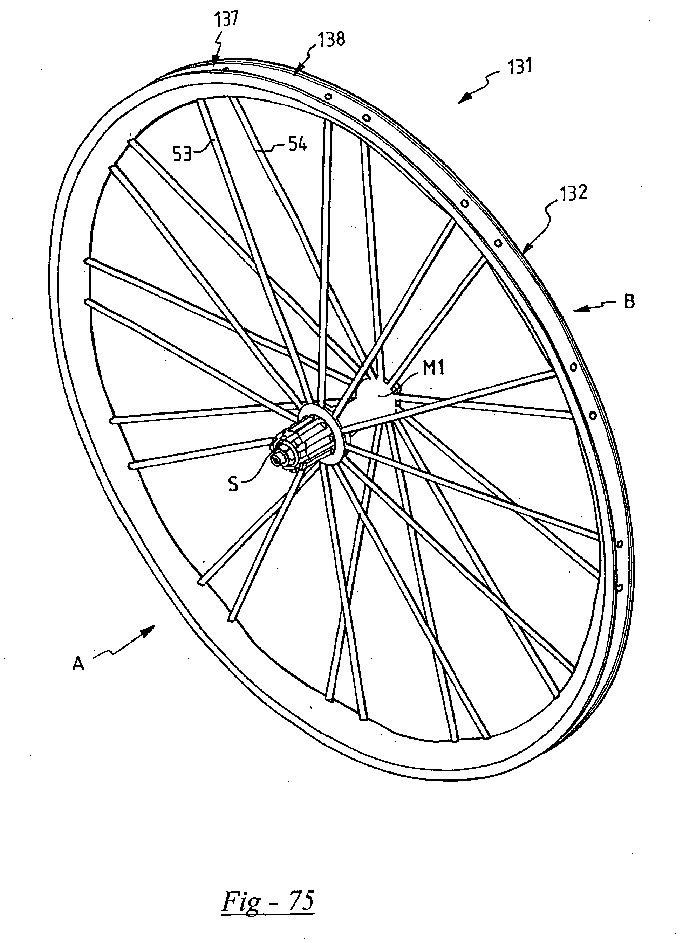

Merely as an example, FIG. 75 shows a wheel 131 with a rim 132 according to a thirteenth embodiment of the invention.

The wheel 131 is a rear wheel having the same spoking as the fifth embodiment described above, among others. The wheel 131 indeed comprises twelve pairs of spokes 53, 54 tensioned between a hub M1 and twelve spoke attachment areas 137 of the rim 132. Between adjacent spoke attachment areas 137, the rim 132 has twelve infra-spoke areas 138.

The twelve spokes 53 extend radially from the hub M1 on the first side A, while the twelve spokes 54 extend radially from the hub M1 on the second side B.

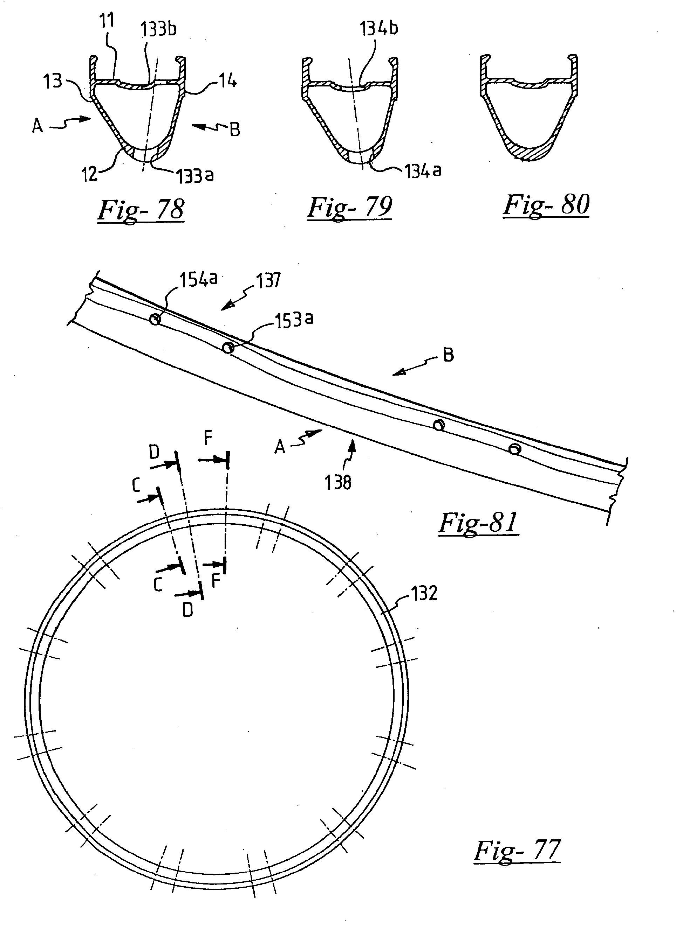

With reference to FIGS. 78-80, which show radial sections of the rim 132 respectively along the planes C-C, D-D, F-F of FIG. 77, the rim 132 has a variable radial section and more specifically has a change of radial section of the side walls 13, 14.

In the spoke attachment areas 137, the rim 132 receives the spokes 53 on the first side A in respective holes 133a made in areas of the rim 132 that are asymmetrical, unbalanced towards the second side B of the wheel 131, as shown in FIG. 78, and receives the spokes 54 on the second side B in respective holes 134a made in areas of the rim 132 that are asymmetrical, also unbalanced towards the second side B of the wheel 131, as shown in FIG. 79. More specifically, at each hole 133a, 134a and adjacent thereto, the side wall 13 on the first side A is longer and more sloping, with respect to the middle plane P, than the side wall 14 on the second side B.

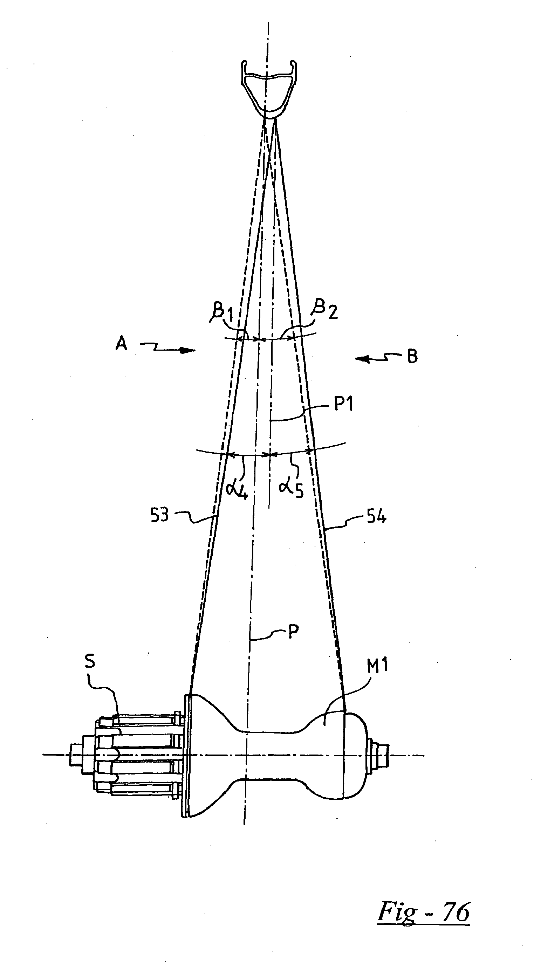

Such asymmetries allow the centres of the spoke attachment holes 133a, 134a to be advantageously displaced with respect to the middle plane P of the rim 132, towards the second side B of the wheel 131. In this way camber angles α4 and α5 are obtained that are substantially equal to each other or in any case less unbalanced than the camber angles β1, β2 that there would be in the case of holes made at the middle plane P, as shown in FIG. 76. Indeed, α4 > β1 and α5 < β2.

Moreover, the described asymmetries of the rim 132 allow the spoke attachment holes 133a, 134a to be kept in the lower bridge 12, where the thickness is greater with respect to the side walls 13, 14 and therefore where the stiffness is greater.

In the upper bridge 11 of the rim 132, coaxially with the holes 133a, 134a, openings 133b, 134b for the passage of the nipples used to attach and tension the spokes 53, 54 can be made.

Along the infra-spoke areas 138, the rim 132 has a symmetrical radial section, as shown in FIG. 80, which shows a section carried out along the plane F-F of FIG. 77.

As is more evident in FIG. 75, the radial section of the rim 132 changes between the significant sections shown in FIGS. 78-80 and described above in a gradual manner, i.e. without abrupt changes.

Although the section is variable in terms of asymmetry, the rim 132 has an area of the cross section - namely of the upper bridge 11, of the lower bridge 12 and of the side walls 13, 14 - that is constant along the entire circumference, apart from the holes 133a, 134a themselves and the openings 133b, 134b where provided for and the other causes outlined above. Therefore, the weight of the rim 132 is evenly distributed along the entire circumference.

The wheel 131 according to the thirteenth embodiment of the invention therefore has optimised camber values α4 and α5 through making local asymmetries of the rim 132 at the spoke attachment areas 137. Thanks to the symmetry of the rim 132 in the infra-spoke areas 138, which extend for a large part of the circumference of the rim 132, the rim 132, and therefore the wheel 131, are more balanced than wheels of the prior art with constant symmetrical or asymmetrical section.

Alternatively, the rim 132 in the infra-spoke areas 138 could have an asymmetrical radial section, unbalanced towards the first side A, to compensate for the unbalancing towards the second side B of the spoke attachment areas 137.

It is also possible to make spoke attachment areas that are asymmetrical only at the spoke attachment holes for the spokes on one side of the hub, and symmetrical at the spoke attachment holes for the spokes on the other side of the hub. In this case, with reference to FIG. 76, camber angles α4 > β1 and β2 can be obtained. Such camber angles, although not perfectly balanced, are in any case improved compared with the camber angles β1 and β2.

It should be understood that in the rims according to the invention, the asymmetrical spoke attachment areas unbalanced towards one side only can also be provided in combination with radial sections of variable radial extent.

It should be understood that the invention is applicable in the case of wheels and rims with any type of spoking, namely with any number of spokes, be they arranged equally spaced apart or grouped into pairs, triplets or other.

Moreover, it should be understood that the section of the rim could change with respect to the inverted A-shaped section shown, not only in the size relationships between the upper bridge, the lower bridge and the side walls and in the slopes of the side walls. For example, the upper bridge could be lacking, or alternatively the wings for holding the tyre could be lacking, the tyre in this case being glued to the upper bridge. Furthermore, the lower bridge could be left out, the spoke attachment holes being made in the side walls. Moreover, there could be cross-members for strengthening the rim. Finally, it should be understood that the rim can have a hole for receiving a tyre inflation valve.

In the case of use of a metallic material, the rims of the invention can advantageously be obtained with a manufacturing process described with reference to FIGS. 83-88, relative to a rim of the seventh embodiment of FIG. 40 merely as an example.

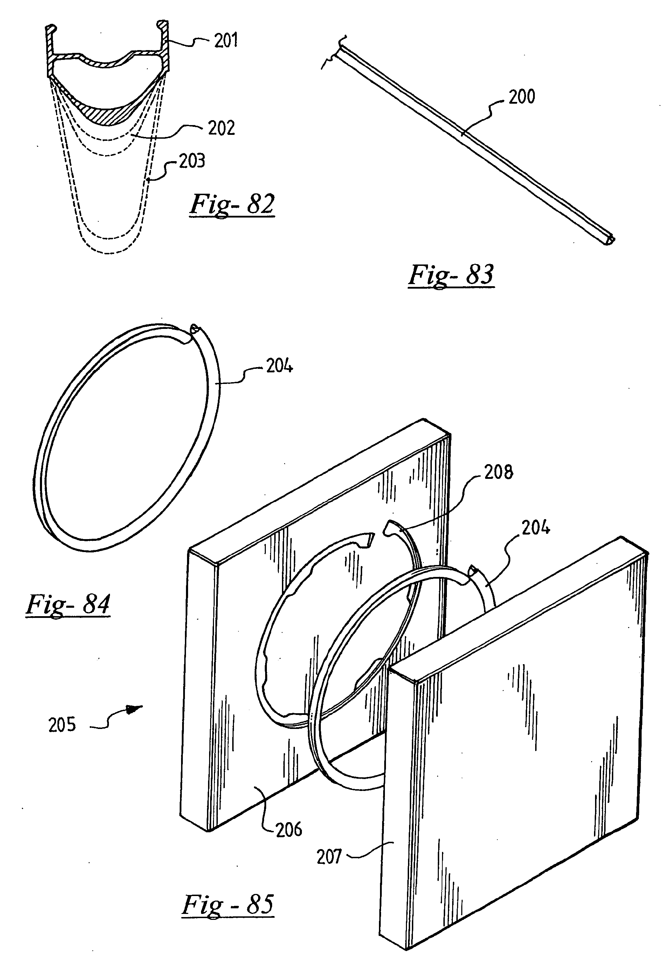

With reference to FIG. 83, the manufacturing process firstly comprises the step of providing a tubular linear piece 200 of suitable length, in practice slightly greater than the final circumference of the wheel, obtained by extrusion of a tubular cylindrical element with predetermined area of the cross section. The area of the cross section of the extruded tubular linear piece 200 corresponds to the area of the section of the final rim that, as seen above in the description of the various embodiments, is constant along the entire rim according to the invention. The cross section of the extruded tubular linear piece 200 is contained in the envelope of all of the radial sections of the rim to be obtained, as shown by the section 201 with a continuous line in FIG. 82, where the significant sections 202, 203 of the rim 72, corresponding to those of FIGS. 42-45, are indicated with a broken line. In variants of the method, it is possible to provide for the cross section of the extruded tubular linear piece to be equal to the most compact radial section of the rim, for example to the section 202 of FIG. 82.

With reference to FIG. 84, the extruded tubular linear piece 200 is wound on itself through a calendaring step to obtain a curved (helical) tubular element 204.

With reference to FIG. 85, the curved tubular element 204 is inserted inside a forming mould 205, formed of two half-moulds 206, 207 that make a cavity 208 having a shape matching the desired final shape of the rim.

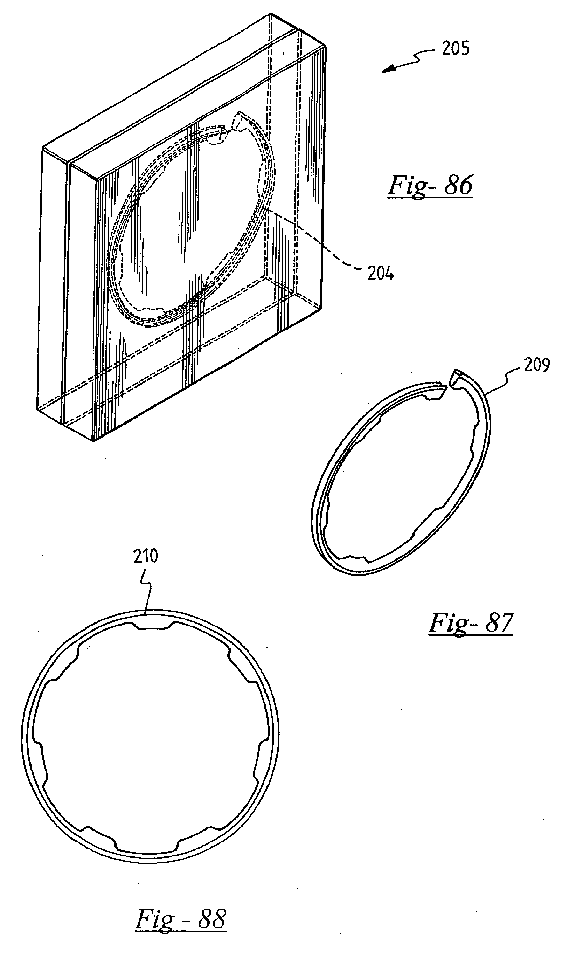

With reference to FIG. 86, the mould 205 is closed and a fluid, preferably oil, is injected under pressure inside the curved tubular element 204, preferably from one end of the curved tubular element 204, while the other end is closed. The push of the pressurised fluid within the curved tubular element 204 makes the curved tubular element 204 stick to the outer wall of the cavity 208 of the forming mould 205. The curved tubular element 204 thus plastically deforms taking on the desired shape and in particular the desired change of section, in any case preserving the constancy of the area of the section.

With reference to FIG. 87, the pressurised fluid is taken out from the curved tubular element 204, the mould 205 is opened and the hydroformed curved tubular element 209 is withdrawn.

With reference to FIG. 88, the ends of the hydroformed curved tubular element 209 are cut to the right size, juxtaposed and joined, for example by welding, to obtain the rim-shaped element 210 with the desired variable section, of constant area. Finally, the spoke attachment holes and possibly the openings for the passage of the nipples are made.

It should be understood that the sequence of the steps described above is subject to variants. In particular, the hydroforming step can be carried out before the rim winding or after joining the ends, and possibly after forming the spoke attachment holes and possible openings for the insertion of nipples. In the case of rims having both the upper bridge and the lower bridge, if the hydroforming step is subsequent to the joining, the pressurised liquid can be injected into the rim precursor through the spoke attachment holes, the openings for the insertion of nipples or an opening provided for a tyre inflation valve.

Hydroforming can be used, besides to make a rim with a change of radial section of the side walls as described above, also in order to make a rim with a different change of radial section, for example of the lower or upper bridge, and/or a rim with constant radial section, but non-circular shape.

The rims of the invention can also be obtained by moulding in composite material.

## Claims

1. Rim (2, 22, 32, 42, 52, 62, 72, 82, 92, 102, 112, 122, 132) for a bicycle spoked wheel (1, 21, 31, 41, 51, 61, 71, 81, 91, 101, 111, 121, 131), comprising two opposite side walls (13, 14), **characterised by** having a change of radial section of the side walls (13, 14).

2. Rim (2, 22, 32, 42, 52, 62, 72, 82, 92, 102, 112, 122, 132) according to claim 1, further comprising a lower bridge (12) extending between said two side walls (13, 14).

3. Rim (2, 22, 32, 42, 52, 62, 72, 82, 92, 102, 112, 122, 132) according to claim 1 or 2, further comprising an upper bridge (11) extending between said two side walls (13, 14).

4. Rim (2, 22, 32, 42, 52, 62, 72, 82, 92, 102, 112, 122) according to any of the previous claims, **characterised in that** the radial section has a constant area along the circumference, apart from holes (3a, 4a, 5a, 33a, 34a, 53a, 54a, 73a, 74a, 75a, 83a, 84a, 85a, 93a, 94a, 95a, 103a, 104a, 113a, 114a, 123a, 124a, 125a, 133a, 134a) for the attachment of spokes and possible openings (3b, 4b, 5b, 33b, 34b, 53b, 54b, 73b, 74b, 75b, 83b, 84b, 85b, 93b, 94b, 95b, 103b, 104b, 105b, 113b, 114b, 115b, 123b, 124b, 125b, 133b, 134b) for the passage of nipples.

5. Rim (2, 22, 32, 42, 52, 62, 72, 82, 92, 102, 112, 122, 132) according to any of the previous claims,
wherein the radial section changes gradually along the circumference.

6. Rim (2, 22, 32, 42, 52, 62, 122, 132) according to any of the previous claims, wherein the radial section changes so as not to keep a predetermined symmetry or asymmetry with respect to a middle plane (P) of the rim along the circumference.

7. Rim (2, 22, 32, 42, 52, 62, 122, 132) according to claim 6, comprising spoke attachment areas (7, 37, 57, 127, 132) and infra-spoke areas (8, 23, 38, 43, 58, 63, 128, 138), wherein the radial section in each spoke attachment area (7, 37, 57, 127, 137) is asymmetric.

8. Rim (2, 22, 32, 42, 52, 62, 122, 132) according to claim 4, wherein the radial section in the spoke attachment areas (7, 37, 57, 127, 137) is asymmetric and unbalanced towards a first side (A) and/or towards a second side (B) of the rim (2, 22, 32, 42, 52, 62, 122, 132).

9. Rim (2, 22, 52, 62, 122) according to claim 8,
wherein in each spoke attachment area (7, 57, 127) there are at least two spoke attachment holes (3a, 4a, 5a, 53a, 54a, 123a, 124a, 125a), at each spoke attachment hole (3a, 4a, 5a, 53a, 54a, 123a, 124a, 125a) the radial section being asymmetric and unbalanced towards a respective side (A, B) of the rim (2, 22, 52, 62, 122).

10. Rim (2, 32, 52, 122, 132) according to one of claims 6-9, wherein the radial section along the infra-spoke areas (8, 38, 58, 128, 138) is symmetrical.

11. Rim (22) according to one of claims 6-9, wherein the radial section in the infra-spoke areas (23) changes continually from one said asymmetrical radial section unbalanced towards a first side (B) of an adjacent spoke attachment area (7), to an asymmetrical radial section unbalanced towards a second side (A) at the centre of the infra-spoke area (23), to one said asymmetrical radial section unbalanced towards the first side (B) of a second adjacent spoke attachment area (7).

12. Rim (42, 62) according to one of claims 6-9,
wherein the radial section in the infra-spoke areas (43, 63) changes continually from one said asymmetrical radial section and unbalanced towards a first side (A) of a first adjacent spoke attachment area (37, 57), to a symmetrical radial section at the centre of the infra-spoke area (43, 63), to one said asymmetrical radial section and unbalanced towards a second side (B) of a second adjacent spoke attachment area (37, 57).

13. Rim (72, 82, 92, 102, 112, 122) according to any of the previous claims, wherein the radial section of the rim (72, 82, 92, 102, 112, 122) changes in terms of radial extent.

14. Rim (72, 102, 112, 122) according to claim 13, comprising spoke attachment areas (77, 107, 117, 127) and infra-spoke areas (78, 108, 118, 128), wherein the radial section in each spoke attachment area (77, 107, 117, 127) has a shorter radial extent (h1, h6) than a radial extent (h2, h7) in each infra-spoke area (78, 108, 118, 128).

15. Rim (82) according to claim 13, comprising spoke attachment areas (87) and infra-spoke areas (88),
wherein the radial section in each spoke attachment area (87) has a longer radial extent (h3) than a radial extent (h4) in each infra-spoke area (88).

16. Rim (92) according to claim 13, comprising spoke attachment areas (97) and infra-spoke areas (98),
wherein the radial section in each spoke attachment area (97) and in a central part (98a) of each infra-spoke area (98) has a comparatively long radial extent (h3, h5), and the radial section in lateral parts (98b, 98c) of each infra-spoke area (98) has a comparatively short radial extent (h4).

17. Rim (92) according to claim 16, **characterised in that** the radial section in each spoke attachment area (97) has a longer radial extent (h3) than a radial extent (h5) of the radial section in the central part (98a) of each infra-spoke area (98).

18. Rim (92) according to claim 16, **characterised in that** the radial section in each spoke attachment area (97) has a radial extent (h3) equal to a radial extent (h5) of the radial section in the central part (98a) of each infra-spoke area (98).

19. Rim (92) according to claim 16, **characterised in that** the radial section in each spoke attachment area (97) has a shorter radial extent (h3) than a radial extent, (h5) of the radial section in the central part (98a) of each infra-spoke area (98).

20. Rim (122) according to claim 1, **characterised in that** the radial section changes so as not to keep a predetermined symmetry or asymmetry with respect to a middle plane (P) of the rim along the circumference, and the radial section also changes in terms of radial extent (h6, h7).

21. Spoked wheel (1, 21, 31, 41, 51, 61, 71, 81, 91, 101, 111, 121, 131) for a bicycle, comprising a rim (2, 22, 32, 42, 52, 62, 72, 82, 92, 102, 112, 122, 132) according to one of claims 1-20, a hub (M1, M2) and a plurality of spokes extending and tensioned between the rim (2, 22, 32, 42, 52, 62, 72, 82, 92, 102, 112, 122, 132) and the hub (M1, M2).

22. Process for manufacturing a rim for a bicycle wheel, **characterised by** comprising a step of hydroforming a precursor of the rim.

23. Process according to claim 22, **characterised in that** in the hydroforming step a change of radial section of the side walls (13, 14) of the rim is caused.

24. Process according to claim 22 or 23, **characterised in that** in the hydroforming step a radial section of constant area of the rim is preserved.

25. Process according to any of claims 22-24, comprising the steps of:
- providing a piece (200) of a predetermined length of a metallic material, having at least two opposite walls,
- winding the piece (200) on itself to obtain a curved element (204),
- hydroforming the curved element (204) into a hydroformed curved element (209).

26. Process according to claim 25, wherein in the step of providing a piece (200), the cross section (201) of the piece (200) is less than or equal to the envelope of all the radial sections (202, 203) of the rim (208) to be obtained.

27. Process according to claim 25 or 26, wherein the step of providing a piece (200) comprises an extrusion step.

28. Process according to one of claims 25-27, wherein the step of winding the piece (200) on itself comprises a calendaring step.

29. Process according to any of claims 25-28, wherein said hydroforming step comprises inserting said curved element (204) inside a forming mould (205) formed from two half-moulds (206, 207) that make a cavity (208) having a shape matching the desired final shape of the rim, closing the forming mould (205), injecting a fluid under pressure inside the curved element to plastically deform it, and removing the hydroformed curved element (209) from the mould (205).

30. Process according to claim 29, wherein said curved element (204) is tubular and said pressurised fluid is injected from an end of the tubular curved element (204), while the other end is closed.

31. Process according to claim 29 or 30, wherein said pressurised fluid is oil.

32. Process according to any of claims 25-31, further comprising the step of juxtaposing and joining the ends of the hydroformed curved element (209) to obtain a rim-shaped element (210).

33. Process according to claim 32, wherein said step of joining the ends of the hydroformed curved element (209) comprises a welding step.

34. Process according to any of claims 32-33, further comprising the step of cutting to the right size the ends of the hydroformed curved element (209) before juxtaposing and joining them.

35. Process according to any of claims 32-35, further comprising the step of making a plurality of spoke attachment holes in the rim-shaped element (210).

36. Process according to any of claims 32-35, further comprising the step of making openings for the passage of the nipples in the rim-shaped element (210).
